# FASCICULE DE BREVET EUROPEEN

(11) **EP 0 533 888 B1**
(45) Date de publication et mention de la délivrance du brevet: **17.09.1997**
(21) Numéro de dépôt: 92908688.2
(22) Date de dépôt: 27.03.1992
(51) Int. Cl.: H04N 7/00

(54) **PROCEDE DE CLASSIFICATION DES PIXELS D'UNE IMAGE ET D'INTERPOLATION TEMPORELLE UTILISANT LADITE CLASSIFICATION**
Verfahren zur Pixel-Klassifizierung in einem Bild und zur temporalen Interpolation unter Verwendung dieser Klassifizierung.
METHOD OF CLASSIFYING PIXELS IN AN IMAGE AND TEMPORAL INTERPOLATION USING THE CLASSIFICATION OBTAINED

(30) Priorité: 05.04.1991 FR 9104164
(43) Date de publication de la demande: 31.03.1993
(73) Titulaire: THOMSON multimedia, 92400 Courbevoie (FR)
(72) Inventeur: ROBERT, Philippe, F-92045 Paris-La Défense Cédex 67 (FR)
(74) Mandataire: Ruellan-Lemonnier, Brigitte
(86) Numéro de dépôt international: FR9200278
(87) Numéro de publication internationale: WO9217983

(56) Documents cités:
- FR-A- 2 637 100
- IEEE Transactions on Communications, vol. 37, no. 12, décembre 1989, (New York, US), S.C. BROFFERIO: "An object-background image model for predictive video coding", pages 1391-1394
- BBC Research Department Report, no. 11, septembre 1987, (Tadworth, GB), G.A. THOMAS: "Television motion measurement for DATV and other applications", pages 1-20
- Signal Processing, vol. 15, no. 3, octobre 1988, (Amsterdam, NL), M. HÖTTER et al.: "Image segmentation based on object oriented mapping parameter estimation", pages 315-334
- Frequenz, vol. 43, no. 5, mai 1989, (Berlin, DE), M. GILGE et al.: "Codierung von farbigen Bewegtbildszenen mit 64 kbit/s - Ein neuer Ansatz zur Verwirklichung eines Bildtelefons im ISDN (Teil III)", pages 126-133

## Description

La présente invention se rapporte au traitement d'images, notamment au traitement d'images vidéo telles que des images de type télévision.

En général, dans le cas d'images vidéo, notamment dans le cas d'images de télévision, on affiche le plus souvent des séquences d'images représentant des scènes en mouvement. De ce fait, le pixel ne doit plus être considéré comme un simple élément d'image mais plutôt comme un élément d'objet, cet élément d'objet pouvant évoluer dans l'image au cours du temps, c'est-à-dire apparaître, se déplacer, changer de luminance et/ou disparaître. Il est donc essentiel de pouvoir prendre en compte ce mouvement au niveau des pixels, ce mouvement étant une cause très fréquente de changement au cours du temps.La prise en compte du mouvement permet donc de traiter efficacement la plupart des situations possibles dans une scène.

Pour réaliser une analyse de scène la plus correcte possible, il est donc important de pouvoir classifier les pixels en leur affectant une étiquette donnant des informations sur l'évolution du mouvement du pixel. Les étiquettes donnant une analyse de scène correcte sont les étiquettes choisies parmi celles appartenant à l'une des classes appelées "normal", "occluant", "apparaîssant" ou "disparaîssant". En effet, l'étiquette "normal" signifie que l'élément d'image est présent dans les deux images successives considérées, l'étiquette "apparaîssant" signifie que l'élément image est présent dans l'image courante mais absent de l'image précédente. L'étiquette "disparaîssant" signifie que l'élément d'image est absent de l'image courante mais présent dans l'image précédente, tandis que l'étiquette "occluant" signifie que l'image courante comporte des objets d'avant plan qui occluent des zones d'arrière plan d'une image précédente. Ces quatre classes répondent, tout à fait bien, aux différents événements pouvant survenir au niveau du pixel.

Le fait d'affecter une étiquette à chaque pixel d'une image se présente donc comme un complément indispensable à l'estimation de mouvement et à l'interpolation d'images utilisées dans le cadre du traitement des images vidéo, notamment à l'interpolation temporelle d'images comme décrit dans la demande de brevet français N° 87 07814 (FR-A-2 616 248) au nom de THOMSON GRAND PUBLIC ou à l'interpolation temporelle d'images à compensation de mouvement corrigé comme décrit dans la demande de brevet français N° 89 04256 (FR-A-2 645 383) déposé au nom de Thomson Consumer Electronics.

En effet, bien que l'interpolation à compensation de mouvement permette de reconstituer les pixels en mouvement avec précision, des problèmes subsistent au niveau des pixels apparaissant ou disparaissant d'une image à l'autre. En général, l'estimateur est perturbé par la présence de tels pixels qui n'ont pas de correspondant dans l'autre image. D'autre part, l'interpolation des pixels ne devrait s'effectuer qu'à partir de l'image d'entrée qui les contient, ce qui constitue une procédure particulière qui ne peut s'appliquer que si les pixels ont été identifiés.

En conséquence, la présente invention a pour but de remédier à ces inconvénients en proposant, tout d'abord, un procédé de définition d'un champ prédictif des vecteurs-mouvement des pixels d'une image appartenant à une séquence d'images animées t₍ⱼ₎, t₍ⱼ₊₁₎, l'indice j étant un nombre entier définissant l'ordre de l'image dans la séquence, deux images consécutives ayant un écart d'indice égal à 1, l'image courante étant référencée t₍ⱼ₊₁₎, l'image précédent l'image courante t₍ⱼ₊₁₎ étant référencée t₍ⱼ₎, le procédé visant à attribuer à chaque pixel d'une image courante de la séquence, un vecteur prédictif de mouvements, ce vecteur prédictif dépendant d'un vecteur-mouvement attribués à un pixel de l'image précédente t₍ⱼ₎ dont le pixel de l'image courante est considéré être la projection temporelle, procédé dans lequel le vecteur-mouvement prédictif attribué à chaque pixel de l'image courante t₍ⱼ₊₁₎ prend en compte au moins pour partie les résultats de la projection temporelle des vecteurs-mouvement des pixels de l'image précédente t₍ᵢ₎. Il prend aussi en compte les résultats d'une classification des pixels de cette image en au moins trois classes, les pixels de chacune des classes étant définis par une même étiquette "normal" pour une première classe, "occluant" pour une seconde classe et "apparaissant" pour une troisième classe, l'attribution d'un vecteur prédictif de mouvements en fonction de l'étiquette et de la classe du pixel origine de la projection étant réalisée de la façon suivante :
- initialement tous les pixels de l'image courante t₍ⱼ₊₁₎ sont étiquetés "apparaissant",
- selon le résultat de la projection temporelle effectuée à partir de l'image précédente t₍ⱼ₎, les pixels de l'image courante t₍ⱼ₊₁₎ qui reçoivent au moins un vecteur en provenance de l'image précédente t₍ⱼ₎ sont affectés d'une étiquette et d'un vecteur prédictif de mouvements selon les règles ci-après :
- si un pixel de l'image courante t₍ⱼ₊₁₎ étiquetée "apparaissant" reçoit un vecteur-mouvement, son étiquette devient "normal",
- si un pixel étiqueté "normal" reçoit un autre vecteur-mouvement, son étiquette devient "occluant" et on lui affecte le vecteur-mouvement du pixel origine dans t₍ⱼ₎ qui minimise la différence inter image déplacée (DFD),
- si un pixel étiqueté "occluant" reçoit au moins un autre vecteur-mouvement, son étiquette reste "occluant" et on lui affecte le vecteur-mouvement de l'un des pixels origine qui minimise la différence inter image déplacée (DFD),
- si un pixel étiqueté "apparaissant" n'a reçu aucun vecteur-mouvement au cours de la projection temporelle des vecteurs de l'image précédente t₍ⱼ₎, il reste étiqueté "apparaissant".

Dans ce cas, le champ de mouvement de l'image courante t₍ⱼ₊₁₎ est obtenue par projection temporelle du champ de mouvement d'une image précédente t₍ⱼ₎ comme décrit dans la demande de brevet N° 88 12468 au nom de THOMSON-CSF.

En prenant en compte le champ d'étiquettes de l'image précédente t₍ⱼ₎, on obtient donc pour l'image courante t₍ⱼ₊₁₎ un champ de prédiction temporelle du mouvement et un champ de prédiction d'étiquettes.

La présente invention a aussi pour but de proposer un nouveau procédé d'interpolation d'image exploitant la classification ci-dessus donnée aux pixels. Le procédé d'interpolation est basé sur une technique d'interpolation à compensation du mouvement inter image qui consiste à interpoler les pixels dans la direction de leur mouvement à partir des deux trames ou images d'entrée les encadrant.

De tels procédés d'interpolation à compensation de mouvement sont décrits par exemple dans les demandes de brevets français N° 87 07814 et N° 89 04256.

En conséquence, la présente invention a pour objet un procédé de définition d'un champ prédictif des vecteurs-mouvement des pixels d'une image à interpoler Tⱼ se trouvant temporellement entre deux images connues t₍ⱼ₎, t₍ⱼ₊₁₎ appartenant à une séquence d'images animées, l'indice j étant un nombre entier définissant l'ordre temporel de l'image dans la séquence, le procédé visant à attribuer à chaque pixel de l'image à interpoler T₍ⱼ₎ un vecteur prédictif de mouvement, ce vecteur prédictif dépendant d'un vecteur de mouvement estimé, attribué à un pixel de l'une des images t₍ⱼ₎, t₍ⱼ₊₁₎ ou t₍ⱼ₊₂₎, procédé caractérisé en ce que le vecteur-mouvement prédictif attribué à chaque pixel de l'image à interpoler T₍ⱼ₎ prend en compte au moins pour partie d'une part les résultats de la projection temporelle sur l'image à interpoler T₍ⱼ₎ des vecteurs-mouvement des images t₍ⱼ₎, t₍ⱼ₊₁₎ ou t₍ⱼ₊₂₎, mais aussi les résultats d'une attribution de classe aux pixels des images réelles t₍ⱼ₎, t₍ⱼ₊₁₎, t₍ⱼ₊₂₎, et de l'image à interpoler T₍ⱼ₎, les pixels de chacune des classes étant définis par une même étiquette "normal" pour une première classe, "occluant" pour une seconde classe, "apparaissant" pour une troisième classe, "trou" pour une quatrième classe, l'étiquette "normal" signifiant que le pixel qui en est affecté est présent dans deux images successives, "apparaissant" signifiant que le pixel qui en est affecté n'est pas présent dans une image consécutive précédente, et "occluant" signifiant que le pixel qui en est affecté est un pixel appartenant à un objet d'avant-plan qui vient masquer un objet d'arrière-plan d'une image précédente, les étiquettes "trou" étant les étiquettes d'un état initial des images à interpoler, procédé caractérisé en ce que dans une première phase, les étiquettes et les vecteurs-mouvement de l'image à interpoler T₍ⱼ₎ sont attribués selon le tableau ci-après en prenant en compte d'une part les étiquettes et vecteurs-mouvement estimés de l'image réelle t₍ⱼ₊₁₎, et d'autre part les étiquettes initiales ou déjà modifiées de l'image T₍ⱼ₎ par réception d'au moins un vecteur-mouvement de l'image réelle t₍ⱼ₊₁₎, tableau dans lequel D1 désigne le vecteur-mouvement d'un pixel origine dans l'image réelle t₍ⱼ₊₁₎, D2 le vecteur-mouvement d'un pixel de l'image à interpoler T₍ⱼ₎ ayant déjà reçu au moins un vecteur-mouvement, DFD désigne la différence inter image déplacée et S un seuil.

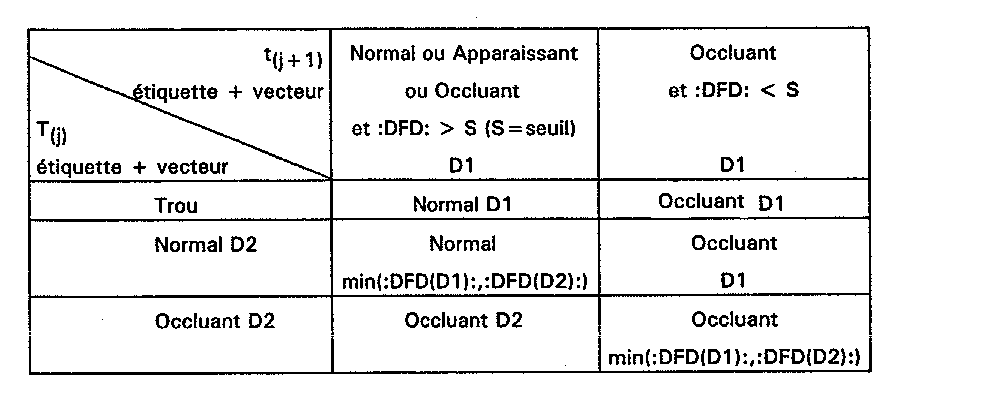

Le procédé ci-dessus permet de définir le champ de vecteur-mouvement et le champ d'étiquettes de l'image à interpoler T₍ⱼ₎ en utilisant le champ de vecteur-mouvement estimé à l'image connue t₍ⱼ₊₁₎. Une fois ces éléments connus, différents procédés peuvent être utilisés pour interpoler la luminance des pixels.

La présente invention a aussi pour objet un procédé d'interpolation temporelle basé sur le procédé décrit ci-dessus mais caractérisé en ce que :
- lors de la projection du champ de mouvement de l'image connue t₍ⱼ₊₁₎ sur l'image à interpoler T₍ⱼ₎, on ne projette pas le vecteur-mouvement des pixels de l'image t₍ⱼ₊₁₎ étiquetés "apparaissant" ;
- ensuite, on réalise la projection du champ de mouvement de l'image t₍ⱼ₎ sur l'image à interpoler T₍ⱼ₎ en utilisant le même procédé que pour la projection de l'image t₍ⱼ₊₁₎, mais en étiquetant "disparaissant" un pixel "trou" rempli par un vecteur-mouvement ;
- puis l'on réalise la projection du champ de mouvement d'une image t(j+2) suivant une image t(j+1) sur l'image à interpoler T(j), en utilisant le même procédé que pour la projection de l'image t(j+1) mais en étiquetant "apparaîssant" un pixel "trous" rempli par un vecteur-mouvement de manière à prendre en compte les pixels "apparaîssant" et "disparaîssant".

D'autres caractéristiques et avantages de la présente invention apparaîtront à la lecture de la description de différents modes de réalisation faite ci-après avec référence aux dessins ci-annexés dans lesquels ;
- la figure 1 est une vue éclatée de plusieurs trames successives avec une trame fictive intercalée entre deux trames successives pour illustrer le procédé de prédiction temporelle mis en oeuvre dans la présente invention ;
- les figures 2 et 3 sont des représentations schématiques illustrant différents types de déplacement entre trames successives ;
- la figure 4 est un organigramme donnant les différentes étapes du procédé permettant de réaliser une interpolation adaptative à compensation de mouvement avec détection et prise en compte de l'étiquetage des pixels conformément à la présente invention ;
- la figure 5 est un schéma expliquant l'étiquetage des pixels de l'image courante t(j+1) obtenue par projection temporelle du champ de mouvement de t(j) ;
- la figure 6 est un schéma donnant le champ de mouvement de l'image interpolée, l'interpolation étant basée sur l'étiquette "occluant" sur les images courantes t(j) et t(j+1) ; et
- la figure 7 est un schéma illustrant le procédé d'interpolation de T(j) par projection des champs de mouvement de t(j+1), t(j+2) et t(j).

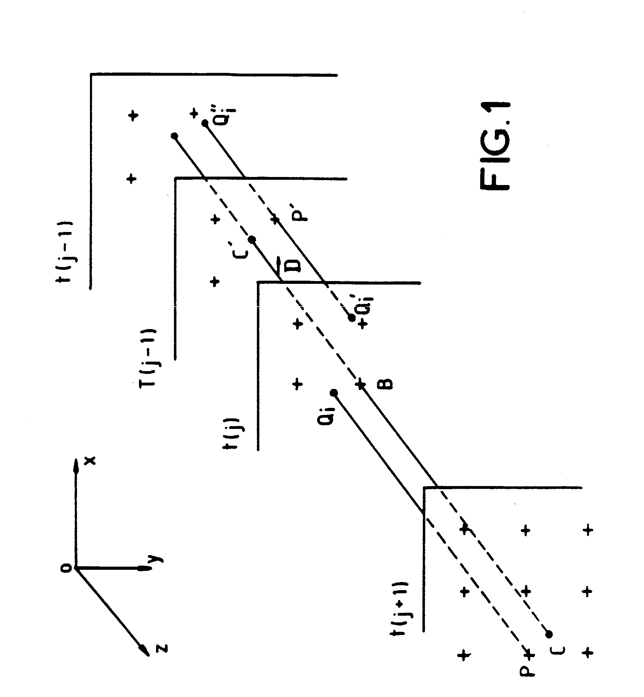

La présente invention concerne donc un procédé de classification des pixels d'une image courante permettant de reconstituer avec précision les zones en mouvement dans l'image et notamment de déterminer les zones "apparaîssant" ou "disparaîssant" d'une image à l'autre. La présente invention concerne aussi un procédé d'interpolation à compensation de mouvement avec prise en compte de cette classification des pixels. Toutefois, la classification des pixels est effectuée sur les pixels d'une image courante obtenue par projection temporelle du champ de mouvement d'une image précédente appartenant à une séquence d'images animées. Dans ce cas, la projection temporelle du mouvement est effectuée selon le procédé décrit dans la demande de brevet N°88 12468 et dans la demande de brevet français N°87 07814. En conséquence, nous ne redécrirons pas complètement l'objet de ces deux brevets. Toutefois, l'on décrira brièvement les parties qui concernent la projection temporelle en se référant à la figure 1. La présente invention sera décrite en se référant à des images à format progressif. Toutefois, il est évident pour l'homme de l'art d'appliquer le procédé à un format entrelacé en tenant compte des décalages de lignes comme cela est expliqué dans la demande de brevet français N°87 07814. D'autre part, on emploiera ci-après indifféremment le terme "trame" ou "image".

Sur la figure 1, on a représenté, dans un repère orthonormé OXYZ dans lequel l'axe des Z correspond au temps, différentes trames t(j -1), t(j), t(j +1) appartenant à une séquence d'images animées ainsi qu'une trame fictive T(j-1) correspondant à une trame interpolée entre les deux images t(j-1), t(j). Dans ce cas, on part du champ de mouvement calculé pour les pixels de la trame t(j). Ce champ de mouvement est composé par un ensemble de vecteurs-mouvement affectés respectivement à chaque pixel de l'image t(j). Soit D = (DX, DY), le vecteur-mouvement d'un pixel B de la trame ou image t(j), si l'on suppose que le mouvement est linéaire, le vecteur- mouvement du pixel B de coordonnées spatiales (x,y) peut être attribué au point C de la trame ou image t(j+1) de coordonnées spatiales x1, y1 qui est le point d'impact sur cette image du vecteur-mouvement attribué à B : (x1, y1) = (x + DX, y + DY)

Toutefois, le point C ne correspond en général pas à un pixel. Conformément au procédé décrit dans la demande de brevet français N°87 07814, on attribue au pixel P le plus proche du point C, le vecteur-mouvement D. De ce fait, on obtient :
D ((P, t(j+1)) = D ((B, t(j)), et
P = (xp, yp) pixel le plus proche de C.

De même, le vecteur-mouvement du pixel B de coordonnées spatiales (x,y) peut aussi être attribué au point C' de la trame fictive T(j-1), de coordonnées spatiales (x1', y1'), ce point C' étant le point d'impact sur cette image du vecteur-mouvement attribué à B :
(x1', y1') = (x - a.DX, Y - a DY) a < 1 est un facteur prenant en compte la distance relative de la trame t(j) à la trame T(j-1).

De ce fait, le point C' ne correspondant généralement pas à un pixel, nous attribuons au pixel P' le plus proche du point C' le vecteur-mouvement D :
D (P', T(j-1)) = D (B, t(j)), et
P' = (xP', yP') pixel le plus proche de C'.

Au cours de cette projection, plusieurs vecteurs-mouvement peuvent être proposés à un même pixel. C'est le cas en analyse d'images,lorsque deux objets se croisent. Nous sommes donc en présence d'un conflit comme expliqué dans la demande de brevet français N°88 12468. Dans cette demande de brevet, différentes solutions ont été proposées pour résoudre le conflit. L'une des solutions retenue consiste à comparer les valeurs absolues de la ¦DFD¦ (Displaced frame difference en langue anglaise ou différence inter-image déplacée). Cette solution sera utilisée dans la présente invention.

Dans le cas de la projection temporelle de l'image courante t(j+1), c'est la différence de luminance entre le pixel P de coordonnées spatiales (xP, yP) sur l'image t(j+1). et le point Qi de coordonnées spatiales (xP - Dxi , yP - Dyi), extrémité sur l'image t(j) du vecteur Di qui donne la ¦DFD¦.

En projection temporelle sur la trame fictive T(j-1), c'est la différence de luminance entre les points Q'i et Q"i, extrémités sur les images ou trames t(j) et t(j-1) du vecteur Di passant par P' qui donne cette ¦DFD¦ appelée ¦DFDi¦.

En cas de conflit, le vecteur sélectionné est celui qui fournit la valeur minimale de ¦DFDi¦. Si plusieurs vecteurs ont des valeurs ¦DFDi¦ égales, on fait en général un choix arbitraire pour affecter un vecteur-mouvement au pixel. D'autre part, une fois la projection de l'ensemble des vecteurs-mouvement terminée, il est possible que certains pixels n'aient pas de vecteurs-mouvement associés, on se trouve alors dans le cas où le champ de mouvement présente des "trous".

Si ce champ de mouvement projeté est utilisé comme prédicteur temporel, notamment dans un procédé d'estimation de mouvement d'images, ces "trous" peuvent être soit conservés tels quels, soit remplis par interpolation spatiale des vecteurs-mouvement, par exemple selon le procédé décrit dans la demande de brevet N°88 12468.

Ces "trous" peuvent avoir différentes origines. Ainsi, lorsque l'on réalise un zoom, les objets grossissent et des détails apparaissent. Dans ce cas, les trous peuvent être remplis par une interpolation spatiale. D'autre part, dans des images successives, des zones précédemment cachées peuvent apparaître sur une nouvelle image. Dans ce cas, un simple procédé d'interpolation spatiale peut conduire, dans certains cas, à des défauts visibles dans l'image, car les vecteurs-mouvement affectés aux pixels de cette zone ne sont pas fiables.

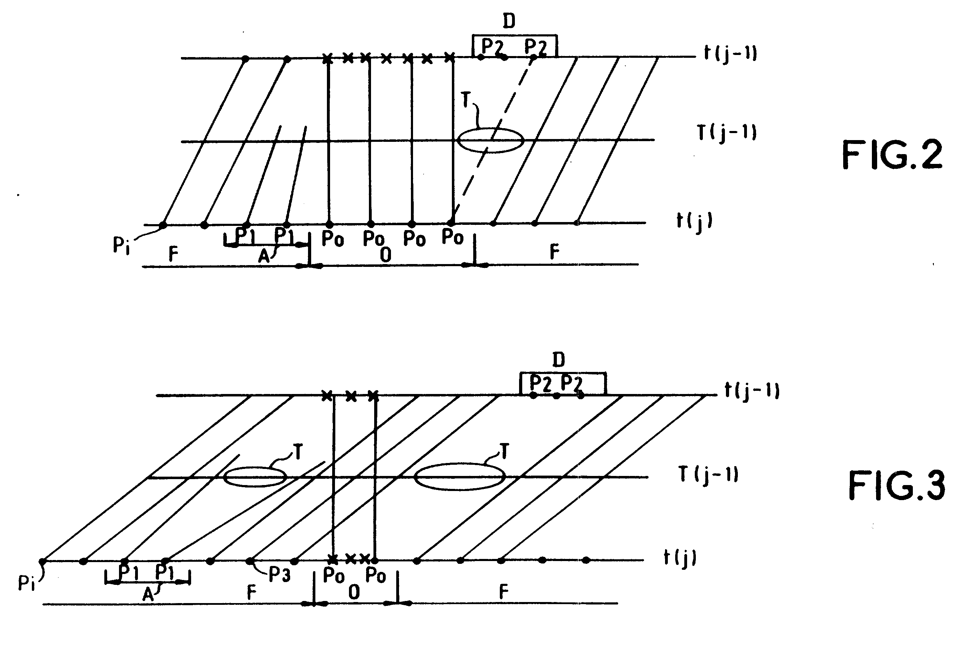

En appliquant le procédé de projection temporelle décrit ci-dessus à l'ensemble des pixels de la trame t(j), on peut obtenir un champ de mouvement tel que représenté schématiquement sur les figures 2 et 3. Ces figures sont des vues bi-dimensionnelles simplifiées des séquences d'images représentées à la figure 1 selon le plan XZ. Comme représenté sur les figures 2 et 3, un vecteur-mouvement relie chaque pixel Pi de l'image courante t(j) à un point de l'image précédente t(j- 1) que si il existe en chaque point de la trame t(J) un point correspondant dans la trame t(j-1). On a, dans ce cas, défini un champ de mouvement pour tous les pixels de la trame t(j), En fait, le cas idéal de la projection temporelle est une bijection des pixels de la trame t(j-1) vers ceux de la trame t(j), chaque pixel de la trame t(j) possédant dans ce cas un et un seul correspondant dans la trame de t(j-1). Dans le cas d'analyse de séquence d'images animées de type télévision, ceci est rarement le cas. En effet, on observe souvent des objets en mouvement par rapport à un fond. Ceci est le cas représenté sur les figures 2 et 3. Il faut alors en général déterminer qu'elle est la place de l'objet par rapport au fond. Dans les images t(j) des figures 2 et 3, les pixels Po reçoivent deux vecteurs-mouvement. Il y a donc conflit et il faut déterminer quel est le vecteur-mouvement qui doit être maintenu, ceci est en général réalisé en calculant la ¦DFD¦ minimale comme mentionné dans les demandes de brevet antérieures. Ces pixels Po correspondent en fait à un objet d'avant-plan qui passe sur le fond F. Ces pixels Po correspondent donc à une zone "occluant" référencée O. D'autre part, le fond en mouvement F se retrouve dans les deux images t(j) et t(j-1) par une simple translation comme représenté clairement sur les figures 2 et 3. Toutefois, pour les pixels se trouvant aux limites de l'objet, à savoir les pixels P1 dans l'image t(j) ou les pixels P2 dans l'image t(j-1), certains sont recouverts dans l'image t(j) et les autres découverts entre t(j-1) et t(j). Ils correspondent donc à une zone "apparaîssant" référencée A ou à une zone "disparaîssant" référencée D. D'autre part, si l'on examine l'image T(j-1) à interpoler et si l'interpolation des pixels de cette image est effectuée à partir des deux trames d'entrée encadrantes t(j) et t(j-1), on observe sur l'image interpolée des défauts du type écho au bord des objets. Ces zones sont, en général, mentionnées "trous" et référencées T dans les figures 2 et 3. De plus, comme représenté sur la figure 3, certains vecteurs-mouvement comme ceux des pixels P3 croisent des pixels Po affectés d'un vecteur-mouvement. Il en résulte des difficultés pour déterminer quel est le vecteur-mouvement qui convient aux pixels, c'est-à-dire quel objet est un objet de premier plan. Il en est de même pour les pixels des zones "apparaîssant" ou "disparaîssant" qui sont des pixels auxquels il est difficile d'affecter un vecteur-mouvement correct.

Or, comme mentionné ci-dessus, lorsqu'on utilise une projection temporelle soit d'une image courante t(j) vers une image courante t(j+1) soit d'une image courante t(j) vers une image à interpoler T(j-1), ces projections sont porteuses d'informations sur les zones dites "occluant", "apparaîssant" ou "disparaîssant" d'une image à l'autre. En conséquence, la présente invention utilise ces informations notamment pour réaliser l'interpolation d'images.

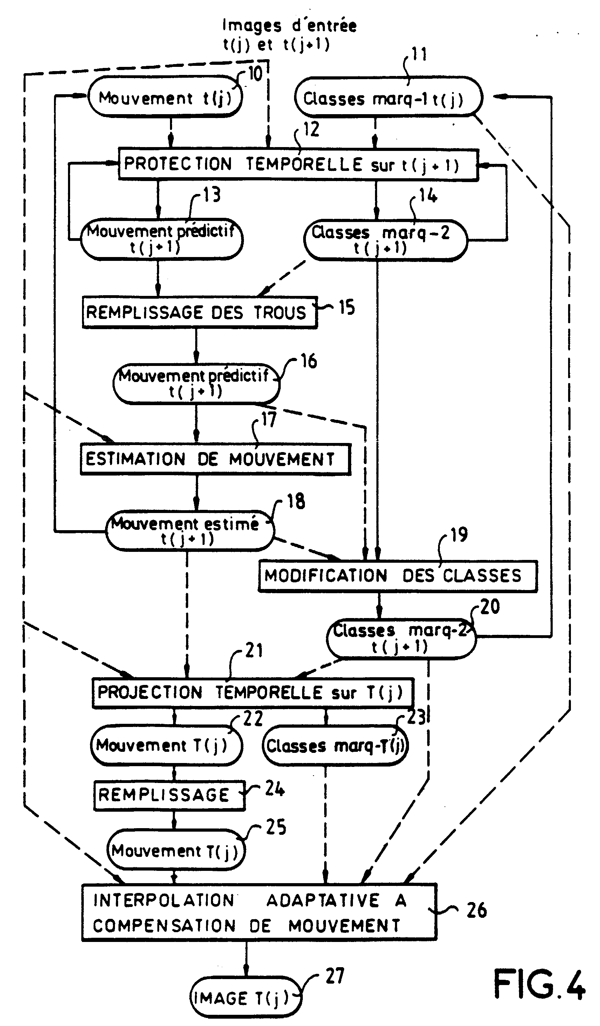

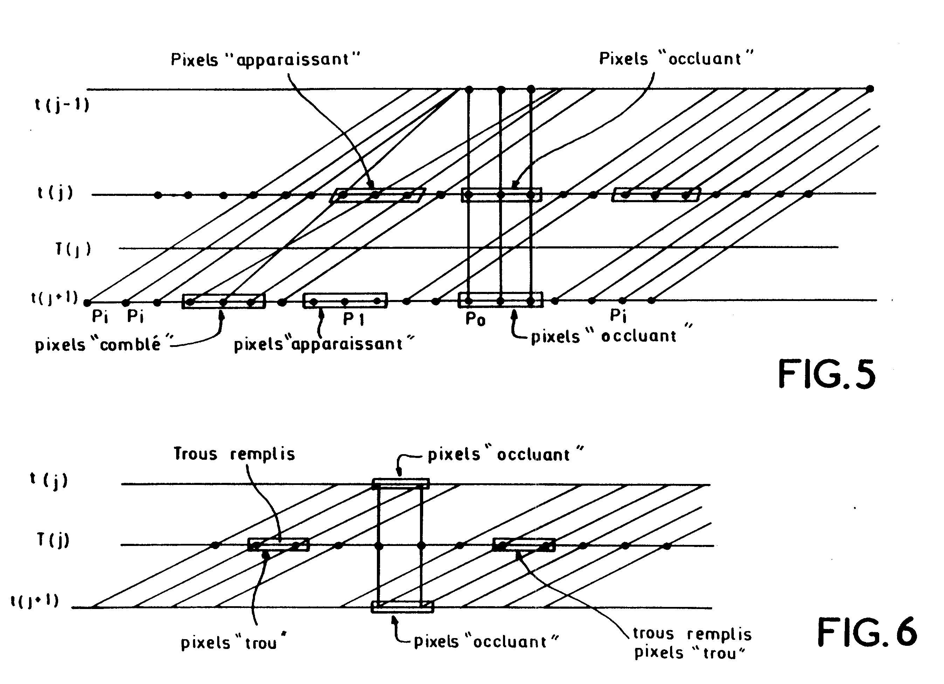

Le fonctionnement du procédé de la présente invention sera décrit maintenant de manière détaillée en se référant aux figures 4 et 5.

Dans la présente invention, on réalise donc une classification des pixels de chaque nouvelle image d'entrée t(j+1) en se basant sur la classification des pixels de l'image d'entrée t(j). En effet, pour l'image d'entrée t(j), chaque pixel comporte un vecteur-mouvement et une étiquette de manière à définir le champ de mouvement estimé et le champ d'étiquettes de l'ensemble des pixels t(j) y compris pour les pixels étiquetés "apparaîssant". La classification des pixels de t(j) s'effectue au cours de la projection temporelle sur la trame t(j+1) du champ de mouvement estimé en t(j), en utilisant la procédure décrite ci-dessus, à savoir la procédure de projection temporelle décrite notamment dans la demande de brevet français N°88 12468.

Selon un premier stade du procédé, on constitue un champ de prédiction des étiquettes de la trame t(j+1) au cours de la projection temporelle. Avant projection, ce champ est vide et initialisé "apparaîssant". Conformément à la présente invention, lors de la projection temporelle, les vecteurs-mouvement de l'image t(j), se projettent les uns après les autres sur t(j+1). Si un pixel Pi étiqueté initialement comme "apparaîssant" reçoit un seul vecteur- mouvement de la trame t(j), son étiquette devient "normal". Si un pixel tel que les pixels Po reçoivent deux vecteurs-mouvement projetés à partir de la trame t(j), il y a conflit. Dans ce cas, on suppose que deux objets opaques ont des mouvements qui les amènent au point courant. Pour identifier le vecteur-mouvement et l'étiquette qui vont être gardés, on compare les valeurs de ¦DFD¦ et l'on retient le vecteur-mouvement à ¦DFD¦ minimale et ce pixel est étiqueté "occluant" s'il ne l'est pas déjà. D'autre part, une fois que tous les vecteurs de t(j) ont été projetés, on identifie les pixels qui n'ont reçu aucun vecteur et on les étiquette "apparaîssant" après projection temporelle, comme représenté par les pixels P1 sur la figure 5.

La procédure décrite ci-dessus peut être résumée ainsi :
- un pixel étiqueté "apparaîssant" reçoit un vecteur : son étiquette devient "normal"
- un pixel étiqueté "normal" reçoit un vecteur : son étiquette devient "occluant" ;
- un pixel étiqueté "occluant" reçoit un vecteur : son étiquette est conservée "occluant".

On obtient donc un champ de mouvement prédictif et un champ d'étiquettes sur t(j+1) qui ne prend pas en compte le champ des étiquettes de t(j).

Toutefois, au moment de la projection temporelle de la trame t(j) sur la trame de t(j+1), il est important de prendre en compte les étiquettes des pixels de la trame t(j). En effet, les pixels appartenant à des zones nouvelles dans la trame t(j), à savoir les pixels étiquetés "apparaîssant" sur la figure 5, ont peu de chance de possèder un vecteur-mouvement exact. Deux solutions peuvent être envisagées.

Selon la première solution, aucun vecteur-mouvement n'est défini pour les pixels étiquetés "apparaîssant" ou bien le vecteur mouvement est défini mais on ne le projette pas. Dans les deux cas, il est nécessaire de pouvoir identifier ces pixels dans la trame t(j), En conséquence, en cours de projection on va examiner le champ d'étiquettes de la trame t(j) et abandonner les pixels avec une étiquette "apparaîssant".

Selon une seconde solution, un vecteur-mouvement est défini pour tous les pixels de t(j) et projeté sur la trame t(j +1), Toutefois, comme le vecteur-mouvement défini pour les pixels étiquetés "apparaîssant" dans la trame t(j) n'est pas fiable, on considère que ce vecteurs-mouvement ne peut pas donner naissance à un pixel étiqueté "occluant". En conséquence, si au cours de la projection temporelle de la trame t(j) sur la trame t(j+1) il y a un conflit entre un tel vecteur-mouvement et un autre vecteur-mouvement étiqueté "normal" ou "occluant", le vecteur-mouvement étiqueté "normal" ou "occluant" sera retenu avec son étiquette. On considère dans ce cas qu'il n'y a pas de phénomène d'occlusion et que le conflit est accidentel. La projection de tous les vecteurs-mouvement de la trame t(j) y compris ceux étiquetés "apparaîssant" a pour but de combler les zones qui sont apparues sur la trame t(j) et sont présentes sur la trame t(j+1).

Un tel vecteur-mouvement se distingue des autres vecteurs-mouvement de la trame t(j), car il est étiqueté "apparaîssant". Par contre, pour le distinguer des autres vecteurs-mouvement dans la trame t(j+1), on l'étiquette différemment, soit par exemple "comblé" comme représenté sur la figure 5. Ainsi, la projection temporelle et la comparaison des vecteurs-mouvement de la trame t(j) par rapport à la trame de t(j+1) s'effectue selon les différents cas suivants comme illustré sur la figure 5 :
- si le pixel de t(j+1) est étiqueté "apparaîssant", et
   - si le pixel de t(j) est étiqueté "normal" ou "occluant", alors le vecteur-mouvement de ce pixel est associé au pixel de la trame t(j+1) dont l'étiquetage devient "normal".
   - mais, si l'étiquette du pixel de t(j) est "apparaîssant", le vecteur-mouvement de t(j) est associé au pixel de t(j+1) dont l'étiquette devient "comblé" ;
- si l'étiquette du pixel de t(j+1) est "normal" ; et
   - si l'étiquette du pixel de t(j) est "normal" ou "occluant", alors il y a conflit et l'on compare les vecteurs-mouvement comme mentionné ci-dessus, le vecteur-mouvement retenu est alors "occluant" et l'étiquette du pixel de t(j+1) devient "occluant" ;
   - si l'étiquette du pixel de t(j) est "apparaîssant", alors on abandonne le vecteur-mouvement qui lui est associé car il est moins pertinent que celui qui est déjà associé au pixel de t(j+1) et l'étiquette de t(j+1) est "normal" ;
- si l'étiquette du pixel de t(j+1) est "comblé" ; et
   - si l'étiquette du pixel de t(j) est "normal" ou "occluant", alors le vecteur-mouvement de ce pixel remplace l'ancien car il est plus pertinent et l'étiquette du pixel de t(j+1) devient "normal" ;
   - si l'étiquette du pixel de t(j) est "apparaîssant", alors on compare les deux vecteurs-mouvement et on sélectionne celui à ¦DFD¦ minimale, l'étiquette de t(j+1) reste "comblé" ;
- si l'étiquette du pixel de t(j+1) est "occluant" ; et
   - si l'étiquette du pixel de t(j) est "normal" ou "occluant", alors on compare les deux vecteurs-mouvement, on sélectionne celui à ¦DFD¦ minimale et l'étiquette de t(j+1) reste "occluant";
   - si, au contraire, l'étiquette de t(j) est "apparaîssant", alors on ne prend pas en compte le vecteur-mouvement issu de la trame t(j) et la situation reste la même, l'étiquette de t(j+1) reste "occluant".

On obtient donc ainsi en même temps qu'un champ de prédiction temporelle du mouvement un champ de prédiction d'étiquettes pour la trame t(j+1) mentionné "marq-2" sur la figure 4. Les différentes étapes sont résumées dans le tableau 1 ci- après :

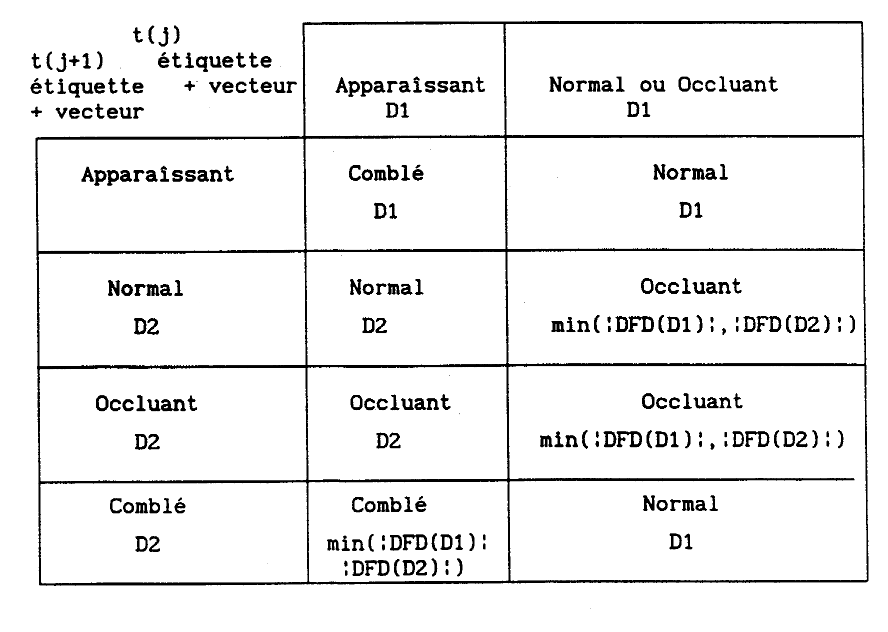

On notera que, dans ce cas, on tient compte de la notion de conflit dès la première image, même si le champ de mouvement est bruité. Le bruit dans le champ d'étiquettes est proportionnel au bruit présent dans le champ de mouvement. Employé avec par exemple, l'estimateur récursif à prédiction temporelle décrit dans la demande de brevet N°88 12468, le champ d'étiquettes est de moins en moins bruité au fur et à mesure que le champ de mouvement devient plus précis et plus lisse sous l'effet de la prédiction temporelle.

Une fois obtenus, le champ de mouvement prédictif et le champ d'étiquettes de la trame t(j+1) en employant le procédé décrit ci-dessus, il est nécessaire de remplir les "trous" restant dans le champ de mouvement de prédiction, c'est-à-dire de définir un vecteur-mouvement pour les pixels étiquetés "apparaîssant", puis de réaliser l'estimation du mouvement en tout point de la trame t(j+1) et enfin la définition du champ d'étiquettes pour la trame t(j+1).

Différentes solutions peuvent être envisagées. Pour le remplissage des "trous", en vue de l'estimation du mouvement au niveau de tous les pixels de la trame t(j+1), les "trous" peuvent être conservés tels quels. Dans ce cas, les pixels correspondant ne disposeront pas de vecteur-mouvement à savoir de prédicteur temporel. D'autre part, les trous peuvent aussi être remplis par interpolation spatiale des vecteurs-mouvement affectés aux pixels encadrant le point concerné en utilisant, par exemple, le procédé décrit dans la demande de brevet français N°88 12468.

Une fois cette opération terminée, on dispose pour l'image t(j+1) d'un champ de prédiction temporelle du mouvement. L'opération suivante consiste donc à estimer le mouvement pour les pixels de l'image t(j+1). On peut par exemple utiliser l'estimateur récursif avec prédiction temporelle décrit dans la demande de brevet français N°88 12468. L'estimateur fournit ainsi un champ de mouvement estimé pour l'image t(j+1).

Une fois l'estimation de mouvement réalisée, on définit conformément au présent procédé un nouveau champ d'étiquettes pour l'image t(j+1) en tenant compte du champ de mouvement estimé et du champ d'étiquettes obtenus au cours de la projection temporelle. Les différentes étiquettes apparaîssant à ce moment pour les pixels de t(j+1) sont les étiquettes "normal", "occluant", "comblé", "apparaîssant". Cette classification des pixels est basée sur le champ de prédiction du mouvement. Comme le champ de mouvement estimé est en principe plus précis que le champ de prédiction temporelle, pour obtenir des étiquettes plus précises, on réalise une comparaison des deux champs de mouvement pour chaque pixel et on modifie l'étiquetage du pixel si les vecteurs sont très différents. En fait, la modification concerne principalement les pixels étiquetés "occluant". En effet, si le vecteur-mouvement d'un pixel donné est modifié de façon importante lors de l'estimation du mouvement, on considère que ce vecteur-mouvement était en fait imprécis et que l'étiquetage "occluant" n'était pas fiable. Pour obtenir la bonne information, on observe la différence en valeurabsolue entre le vecteur-mouvement obtenu lors de la prédiction temporelle et le vecteur-mouvement estimé pour chacune des composantes horizontale et verticale :
- soit le vecteur prédit Dp = (dxp, dyp) et le vecteur estimé De = (dxe, dye). On calcule alors :
   diff-x = ¦dxe - dxp¦ et diff-y = ¦dye - dyp¦. Si l'une des deux différences diff-x et diff-y est supérieure à un seuil S, l'étiquette associée "occluant" devient "normal".

Si l'on emploie l'estimateur décrit dans le brevet N°89 0673, cette opération de modification de la classification est effectuée après filtrage médian du champ de mouvement et avant projection sur l'image à interpoler T(j).

D'autre part, l'étiquetage "comblé" qui servait à la distinction entre les vecteurs-mouvement projetés issus du remplissage et les autres, ne sert plus lors de l'estimation de mouvement ou lors de la projection temporelle sur l'image à interpoler T(j). En conséquence, l'étiquette "comblé" sera remplacée par l'étiquette "normal". De ce fait, on obtient pour le champ d'étiquettes de t(j+1) la nouvelle classification :
- si l'étiquette de t(j+1) est "normal", elle reste "normal" ;
- si l'étiquette de t(j+1) est "apparaîssant", elle reste "apparaissant" ;
- si l'étiquette de t(j+1) est "occluant" et si diff-x < S et diff-y < S, l'étiquette reste "occluant", sinon l'étiquette devient "normal" ; et
- si l'étiquette de t(j+1) est "comblé", elle devient "normal".

Une fois cette opération réalisée, on dispose donc d'un champ de mouvement estimé pour l'image t(j+1) ainsi qu'un nouveau champ d'étiquettes des pixels de t(j+1) du même type que ceux de l'image d'entrée t(j) ; à savoir un champ d'étiquette à trois classes. Ces deux champs peuvent donc être utilisés en projection temporelle sur l'image à interpoler T(j). Ils peuvent aussi être utilisés dans la projection temporelle vers une image d'entrée suivante t(j+2) selon le procédé décrit ci-dessus pour la projection temporelle de l'image t(j) sur l'image t(j+1),

Il est possible d'envisager d'autres modifications lors des différentes phases décrites ci-dessus. Ainsi, il est possible de ne valider l'étiquette "occluant" que lorsque le pixel que l'on suit le long de la séquence d'images animées a été marqué "occluant" au moins n fois avec n strictement supérieur à 1. Cela nécessite une mise en mémoire de l'ancienneté de l'étiquette "occluant".

Selon une autre modification, au moment de la projection temporelle du champ de mouvement de l'image t(j) sur l'image t(j+1), il est possible de détecter les zones "disparaîssant" de t(j) à t(j+1). Un pixel de l'image t(j) dont le vecteur-mouvement projeté sur l'image t(j+1) se trouve en conflit avec un autre pixel et n'est pas retenu, est alors étiqueté "disparaîssant". Dans ce cas, une nouvelle classe est introduite et l'on obtient quatre types d'étiquettes sur l'image t(j), à savoir "normal", "occluant", et "apparaîssant", "disparaîssant".

On décrira maintenant, plus particulièrement avec référence à la figure 6, l'application du procédé de classification des pixels d'une image courante décrit ci-dessus à l'interpolation temporelle d'une image T(j). L'interpolation d'image est utilisée en traitement d'image notamment pour réaliser un changement de fréquence, par exemple le passage de la fréquence 50Hz à la fréquence 60Hz ou en télévision haute définition pour transmettre un maximum d'informations.

Différents procédés d'interpolation temporelle ont déjà été décrits notamment dans la demande de brevet français N°87 07814 et dans la demande de brevet français N°89 04256. La prise en compte de la classification donnée ci-dessus permet d'améliorer les procédés décrits dans ces demandes de brevet en permettant d'estimer correctement les vecteurs-mouvement affectés aux zones "apparaîssant" et "disparaîssant" et de déterminer aisément les zones de premier plan croisant celles d'arrière plan d'une image à l'autre.

Dans le cas d'une interpolation avec prise en compte des zones "apparaîssant" et "disparaîssant", il s'agit de définir pour chaque pixel de l'image à interpoler T(j) située entre les images courantes t(j) et t(j+1), son vecteur-mouvement et son étiquette, puis d'en interpoler la luminance en prenant compte ledit vecteur-mouvement et ladite étiquette.

L'image à interpoler T(j) se trouvant entre deux images courantes t(j) et t(j+1) pour lesquelles ont déjà été définis, comme décrit ci-dessus, un champ de mouvement et un champ d'étiquettes, les étiquettes possibles pour l'image à interpoler T(j) sont les suivantes :
- "normal" : le pixel est présent dans les deux images d'entrée encadrantes t(j) et t(j+1) ; il est donc interpolé à partir des deux extrémités de son vecteur-mouvement sur les images t(j) et t(j+1), en utilisant par exemple le procédé décrit dans la demande de brevet français N°87 07814 ;
- "apparaîssant" : le pixel est présent uniquement dans l'image d'entrée t(j+1), sa luminance est alors égale à la luminance du point d'extrémité de son vecteur-mouvement sur l'image t(j+1), la luminance de ce point pouvant être calculée par interpolation bilinéaire selon le procédé décrit dans la demande de brevet français mentionnée ci-dessus :
- "disparaîssant" : le pixel est présent uniquement dans l'image d'entrée t(j), sa luminance est alors égale à la luminance du point extrémité de son vecteur-mouvement sur l'image t(j) ; la luminance de ce point peut être calculée par interpolation bilinéaire comme mentionné ci-dessus.

Concernant la définition du champ de mouvement de l'image à interpoler T(j), les principales difficultés sont d'estimer correctement les vecteurs dans les zones "apparaîssant" et "disparaîssant" ainsi que sur les zones de premier plan croisant celles d'arrière plan d'une image à l'autre comme mentionné ci-dessus. Pour obtenir une bonne définition du champ de mouvement de l'image à interpoler T(j), on peut donc exploiter, conformément à la présente invention, la classification des pixels effectuée pour l'image courante t(j+1) comme mentionné ci-dessus.

Différents procédés de définition du champ de mouvement et du champ d'étiquettes pour l'image à interpoler T(j) peuvent être utilisés.

Le premier procédé consiste à définir le champ de mouvement de l'image à interpoler T(j) par projection temporelle du champ de mouvement estimé pour l'image courante t(j+1) et en utilisant son champ d'étiquettes à trois classes, à savoir "normal", "apparaîssant" et "occluant". Ce procédé sera décrit de manière plus détaillée avec référence à la figure 6. La classification des pixels de l'image à interpoler T(j) s'effectue au cours de la projection temporelle du champ de mouvement de l'image courante t(j+1) sur l'image à interpoler T(j). Initialement, tous les points de l'image à interpoler T(j) sont étiquetés "trous". Puis, les vecteurs-mouvement de l'image courante t(j+1) sont projetés les uns après les autres sur l'image à interpoler T(j) de manière connue. Ensuite l'affectation d'une étiquette et d'un vecteur-mouvement pour tous les pixels de l'image à interpoler T(j) est effectuée de la manière suivante :
- si le pixel de l'image à interpoler T(j) est étiqueté "trou", et
- si le pixel de l'image courante t(j+1) est étiqueté "occluant" et si sa valeur de ¦DFD¦ < à seuil, l'étiquette du pixel de T(j) devient "occluant" ;
- si le pixel de t(j+1) est étiqueté "normal" ou "apparaîssant" ou "occluant" et si la valeur ¦DFD¦ > à seuil, alors l'étiquette du pixel de T(j) devient "normal" ;

- si l'étiquette du pixel de T(j) est "normal", et
   - si l'étiquette du pixel de t(j+1) est "occluant" et si la valeur ¦DFD¦ < à seuil, alors on remplace le vecteur-mouvement déjà attribué au pixel de l'image à interpoler T(j) par le nouveau vecteur qui est "occluant" et la nouvelle étiquette pour le pixel de T(j) devient "occluant" ;
   - si le pixel de t(j+1) est étiqueté "normal", ou "apparaissant" ou "occluant" et si la valeur ¦DFD¦ > à seuil, alors les deux vecteurs-mouvement sont comparés sur la base des valeurs de ¦DFD¦ et l'étiquetage n'est pas modifié, à savoir l'étiquette du pixel de T(j) reste "normal" mais on attribue à ce pixel le vecteur-mouvement à ¦DFD¦ minimale ;
- si le pixel de T(j) est étiqueté "occluant", et
   - si le pixel de t(j+1) est étiqueté "occluant" et si sa valeur ¦DFD¦ < à seuil, alors les vecteurs-mouvement sont comparés sur la base des valeurs de ¦DFD¦ et l'étiquetage n'est pas modifié à savoir l'étiquette du pixel de T(j) reste "occluant" mais on attribue à ce pixel le vecteur-mouvement à ¦DFD¦ minimale ;
   - si le pixel de t(j+1) est étiqueté "normal" ou "apparaîssant" ou "occluant" et si la valeur ¦DFD¦ > à seuil, alors on conserve l'ancien vecteur-mouvment et l'étiquetage n'est pas modifié, à savoir l'étiquette du pixel de T(j) reste "occluant".

Ainsi, quand un pixel de l'image à interpoler T(j) reçoit un vecteur de l'image courante t(j+1), on compare tout d'abord leurs étiquettes respectives, puis selon les cas, on compare les valeurs de ¦DFD¦ du vecteur de l'image courante t(j+1) projeté et du pixel de l'image à interpoler T(j) recevant ce vecteur. Une fois la projection réalisée, les étiquettes des pixels de l'image à interpoler T(j) appartiennent à l'une des trois classes "normal", "occluant", "trou". Les pixels étiquetés "trou" ne possèdent pas de vecteurs associés. La distinction entre "normal" et "occluant" a donc permis de résoudre les ambiguités dues au croisement d'objets entre deux images d'entrée. Cette distinction disparaît donc par la suite. Le procédé décrit ci-dessus a donc essentiellement servi à définir le champ de mouvement des pixels de l'image à interpoler T(j) supposés présents dans les images courantes t(j) et t(j+1). A ce stade, les étiquettes "apparaîssant" et "disparaîssant" n'existent pas encore dans l'image à interpoler T(j). Ces pixels sont supposés être présents parmi ceux actuellement étiquetés "trou". On dispose donc d'un champ de mouvement incomplet sur l'image à interpoler T(j). Il faut donc remplir les trous dans le champ de mouvement de l'image à interpoler T(j). Ce remplissage peut être effectué par interpolation spatiale, par exemple selon le procédé décrit dans la demande de brevet français N°88 12468. Une fois cette interpolation spatiale réalisée, chaque pixel de l'image à interpoler T(j) possède un vecteur-mouvement passant par le pixel et dont les extrémités se trouvent sur les deux images courantes t(j) et t(j+1).

Une fois ce remplissage réalisé, on effectue la classification des pixels et une interpolation adaptative par une prise en compte uniquement des extrémités "non-occluantes" des vecteurs-mouvement sur les images courantes t(j) et t(j+1). Ce procédé spécifique est illustré plus particulièrement sur la figure 6. Le champ de mouvement de l'image à interpoler T(j) après remplissage des trous est filtré médian conformément au procédé décrit dans la demande de brevet français N°89 04256, par exemple. De ce fait, les pixels de l'image à interpoler T(j) étiquetés "normal" ou "occluant" vont être interpolés à partir des deux images courantes t(j) et t(j+1), En ce qui concerne les pixels étiquetés "trou" sur l'image à interpoler T(j), on observe les deux extrémités du vecteur-mouvement en examinant l'étiquette de chacun des quatre pixels encadrant chacune desdites extrémités. Si l'un au moins de ces pixels est étiqueté "occluant", l'extrémité considérée est dite "occluante" et est abandonnée à moins que les extrémités soient dans cette situation, ce qui annule leur effet, le pixel étiqueté "trou" sur l'image à interpoler T(j) n'étant interpolé qu'à partir des extrémités "non-occluantes".

Dans ce cas, on observe pour chacun des vecteurs-mouvement le type du pixel le plus proche des extrémités dans les images courantes t(j+1) et t(j) :
- si à l'extrémité se trouvant sur l'image t(j+1), l'un des quatre pixels encadrant l'extrémité du vecteur est "occluant" et si au niveau de l'extrémité se trouvant sur l'image t(j) aucun des quatre pixels encadrant l'extrémité du vecteur n'est "occluant", alors on ne reconstruit le vecteur-mouvement du pixel de l'image à interpoler T(j) qu'à partir de l'image courante t(j) ;
- si au niveau de l'extrémité se trouvant sur l'image t(j), l'un des quatre pixels encadrant l'extrémité du vecteur-mouvement est "occluant" et si au niveau de l'extrémité se trouvant sur l'image t(j+1), aucun des quatre pixels encadrant l'extrémité du vecteur-mouvement n'est "occluant", alors on ne reconstruit le vecteur-mouvement de l'image à interpoler T(j) qu'à partir de t(j+1) ;
- si aux deux extrémité du vecteur-mouvement, l'un des quatre pixels encadrant les extrémités des vecteurs-mouvement issus de l'image à interpoler T(j) est "occluant", alors on reconstruit à partir des deux images de manière classique, et
- si aux deux extrémités du vecteur, aucun des quatre pixels encadrant n'est "occluant", alors on reconstruit aussi à partir des deux images.

Dans ce cas, l'identification des pixels "apparaîssant" et "disparaîssant" est réalisée au moment de l'interpolation sur les pixels "trou". On s'appuit donc sur l'étiquetage "occluant" des images t(j) et t(j+1) pour détecter les pixels de l'image à interpoler T(j) "apparaîssant" ou "disparaîssant". Cette information est la plus fiable car elle a été filtrée comme décrit ci-dessus. D'autre part, il est possible de réaliser aussi un filtrage temporel puisqu'un pixel "occluant" le reste généralement sur plusieurs images.

Un autre procédé pouvant être utilisé dans ce cas consiste à prendre en compte en plus de l'étiquetage "occluant" les étiquettes "apparaîssant" sur l'image courante t(j+1) et "disparaîssant" sur l'image courante t(j). On dispose dans ce cas des champs d'étiquettes suivants : sur l'image courante t(j+1), les étiquettes "normal", "occluant", "apparaîssant", "disparaîssant" et sur l'image à interpoler T(j) les étiquettes "normal", "occluant" et "trou".

Comme précédemment, les pixels de l'image à interpoler T(j) étiquetés "normal", ou "occluant" sont interpolés de manière connue à partir des images courantes t(j) et t(j+1). Quand aux pixels étiquetés "trou", ils sont interpolés de la façon suivante :
- si au niveau de l'image courante t(j), l'un des quatre pixels encadrant l'extrémité du vecteur-mouvement est "occluant" et aucun n'est "disparaissant" etsi au niveau de l'image courante t(j+1) l'un des quatre pixels encadrant l'extrémité du vecteur-mouvement est "apparaîssant", alors on ne reconstruit le pixel de l'image à interpoler T(j) qu'à partir de t(j+1) ;
- si au niveau de l'image à interpoler t(j+1), l'un des quatre pixels encadrant l'extrémité du vecteur-mouvement est étiqueté "occluant" et aucun n'est "apparaissant" et au niveau de l'image courante t(j), l'un des quatre pixels encadrant l'extrémité du vecteur-mouvement est étiqueté "disparaissant", alors on ne reconstruit le pixel de l'image à interpoler T(j) qu'à partir de t(j) ;
- dans tous les autres cas, le pixel est reconstruit à partir des deux extrémités sur les images courantes t(j+1) et t(j).

On décrira maintenant l'ensemble des différentes étapes permettant de réaliser l'interpolation d'une image T(j) par projection temporelle du champ de mouvement de t(j+1) sur l'image à interpoler T(j) en prenant la classification des pixels réalisée sur l'image courante t(j+1) à partir de la classification des pixels de l'image courante t(j) en se référant notamment à la figure 4. Comme représenté sur cette figure 4, on a en entrée les images t(j) et t(j+1). On connaît le champ de mouvement estimé sur t(j) symbolisé par la référence 10 et le champ d'étiquettes de t(j) symbolisé par la référence 11. Par projection temporelle sur t(j+1), comme représenté en 12, on obtient un champ de mouvement prédictif pour l'image t(j+1) en 13, ainsi qu'un champ d'étiquettes pour t(j+1) en 14. Les informations obtenues en 13 et en 14 sont utilisées pour réaliser le remplissage des trous dans l'image t(j+1) comme représenté par la référence 15. Puis une fois ce remplissage réalisé, on obtient un champ de mouvement prédictif sur l'image courante t(j+1) en 16 qui est utilisé pour réaliser une estimation de mouvement en association avec des informations sur l'image d'entrée t(j), comme représenté par la référence 17. Une fois cette estimation de mouvement réalisée, on dispose du champ de mouvement estimé sur t(j+1) en 18 et les éléments contenus en 18, en 16 et en 14 sont utilisés pour réaliser une modification de l'étiquetage des pixels de t(j+1) comme référencé en 19 de manière à obtenir le champ d'étiquettes de t(j+1) en 20. Ce champ d'étiquettes de t(j+1) ainsi que le champ de mouvement estimé de t(j+1) en 18 sont utilisés en association avec les éléments concernant l'image d'entrée t(j) pour réaliser une projection temporelle sur une image à interpoler T(j), comme représenté par la référence 21. Une fois cette projection temporelle réalisée, on obtient un champ de mouvement pour l'image à interpoler T(j) ainsi qu'un champ d'étiquettes référencé respectivement 22 et 23. Dans le champ de mouvement de l'image à interpoler T(j), on réalise le remplissage des trous en 24 de manière à obtenir un nouveau champ de mouvement pour l'image à interpoler T(j) en 25. Ce nouveau champ de mouvement issu de 25 ainsi que le champ d'étiquettes issu de 23, puis le champ d'étiquettes concernant l'image courante t(j+1) issu de 20, et le champ d'étiquettes concernant l'image courante t(j) issu de 11 sont utilisés pour réaliser une interpolation adaptative à compensation de mouvement donnant l'image à interpoler T(j) comme référencé par 26 et 27.

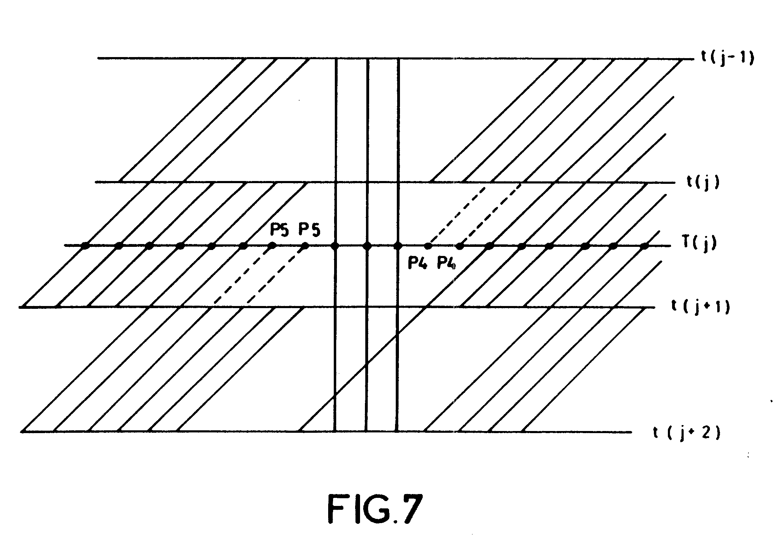

On décrira maintenant en se référant plus particulièrement à la figure 7, un autre procédé d'interpolation d'une image T(j) par projection des champs de mouvement de trois images courantes t(j+1), t(j+2) et t(j). Dans ce cas, les vecteurs-mouvement des pixels étiquetés "trou" de l'image à interpoler T(j) sont définis par projection temporelle des vecteurs-mouvement t(j) et t(j+2). La nouvelle classe des pixels étiquetés "trou" est directement déduite de cette projection comme représentée clairement sur la figure 7. Dans ce cas, on procède donc de la façon suivante :
- 1. Projection du champ de mouvement de l'image courante t(j+1) sur l'image à interpoler T(j) selon le procédé décrit ci-dessus concernant la projection d'image mais sans projeter les vecteurs-mouvement étiquetés "apparaîssant" ;
- 2. Projection du champ de mouvement de l'image courante t(j) sur T(j) à l'exception des vecteurs-mouvement étiquetés "apparaîssant". Cette projection est destinée aux pixels étiquetés "trou" uniquement, comme représenté par les pixels P4 sur la figure 7. En conséquence, les vecteurs-mouvement dont le point d'impact est au plus près d'un pixel étiqueté "trou" sont retenus. Lorsqu'un pixel "trou" est ainsi rempli, son étiquette devient "disparaîssant".
- 3. Projection du champ de mouvement de l'image courante t(j+2) sur l'image à interpoler T(j), à l'exception des vecteurs-mouvement étiquetés "apparaîssant".Cette projection est destinée aux pixels encore étiquetés "trou" à la fin de l'étape précédente. En conséquence, les vecteurs-mouvement dont le point d'impact est au plus près d'un pixel étiqueté "trou" tel que le pixel P5 sont retenus. Lorsqu'un pixel étiqueté "trou" est ainsi rempli, son étiquette devient "apparaîssant". On réalise ensuite une interpolation spatiale des vecteurs-mouvement pour les pixels restant sans vecteur-mouvement associé et, dans ce cas, on remplace l'étiquette "trou" par "normal". Puis on réalise une interpolation dans l'ensemble des pixels avec prise en compte de l'étiquette associée de la façon suivante :
   - à partir de deux images courantes t(j) et t(j+1) si le pixel est étiqueté "normal" ;
   - à partir de l'image courante t(j) uniquement si le pixel est étiqueté "disparaîssant" ;
   - à partir de l'image courante t(j+1) uniquement si le pixel est étiqueté "apparaîssant".

Toutefois, ce procédé d'interpolation nécessite un bon champ de mouvement du fait de la projection temporelle de champs de mouvement lointains tels que celui del'image courante t(j) mais surtout celui de l'image courante t(j+2), car les erreurs s'amplifient.

## Revendications

1. Procédé de définition d'un champ prédictif des vecteurs-mouvement des pixels d'une image appartenant à une séquence d'images animées t₍ⱼ₎, t₍ⱼ₊₁₎, l'indice j étant un nombre entier définissant l'ordre de l'image dans la séquence, deux images consécutives ayant un écart d'indice égal à 1, l'image courante étant référencée t₍ⱼ₊₁₎, l'image précédent l'image courante t₍ⱼ₊₁₎ étant référencée t₍ⱼ₎, le procédé visant à attribuer à chaque pixel d'une image courante de la séquence, un vecteur prédictif de mouvements, ce vecteur prédictif dépendant d'un vecteur-mouvement attribués à un pixel de l'image précédente t₍ⱼ₎ dont le pixel de l'image courante est considéré être la projection temporelle, procédé dans lequel le vecteur-mouvement prédictif attribué à chaque pixel de l'image courante t₍ⱼ₊₁₎ prend en compte au moins pour partie les résultats de la projection temporelle des vecteurs-mouvement des pixels de l'image précédente t₍ᵢ₎, et caractérisé en ce qu'il prend aussi en compte les résultats d'une classification des pixels de cette image en au moins trois classes, les pixels de chacune des classes étant définis par une même étiquette "normal" pour une première classe, "occluant" pour une seconde classe et "apparaissant" pour une troisième classe, l'attribution d'un vecteur prédictif de mouvements en fonction de l'étiquette et de la classe du pixel origine de la projection étant réalisée de la façon suivante :
- initialement tous les pixels de l'image courante t₍ⱼ₊₁₎ sont étiquetés "apparaissant",
- selon le résultat de la projection temporelle effectuée à partir de l'image précédente t₍ⱼ₎, les pixels de l'image courante t₍ⱼ₊₁₎ qui reçoivent au moins un vecteur en provenance de l'image précédente t₍ⱼ₎ sont affectés d'une étiquette et d'un vecteur prédictif de mouvements selon les règles ci-après :
- si un pixel de l'image courante t₍ⱼ₊₁) étiquetée "apparaissant" reçoit un vecteur-mouvement, son étiquette devient "normal",
- si un pixel étiqueté "normal" reçoit un autre vecteur-mouvement, son étiquette devient "occluant" et on lui affecte le vecteur-mouvement du pixel origine dans t₍ⱼ₎ qui minimise la différence inter image déplacée (DFD),
- si un pixel étiqueté "occluant" reçoit au moins un autre vecteur-mouvement, son étiquette reste "occluant" et on lui affecte le vecteur-mouvement de l'un des pixels origine qui minimise la différence inter image déplacée (DFD),
- si un pixel étiqueté "apparaissant" n'a reçu aucun vecteur-mouvement au cours de la projection temporelle des vecteurs de l'image précédente t₍ⱼ₎, il reste étiqueté "apparaissant".

2. Procédé selon la revendication 1, caractérisé en ce que le vecteur-mouvement d'un pixel de l'image précédente t₍ⱼ₎ étiquetée "apparaissant" n'est pas attribué au pixel de l'image courante t₍ⱼ₊₁₎ recevant le vecteur-mouvement de ce pixel de l'image précédente.

3. Procédé selon la revendication 1, caractérisé en ce qu'il comporte une quatrième classe dont les pixels reçoivent l'étiquette "comblé" et en ce que les étiquettes et les vecteurs mouvements de l'image courante t₍ⱼ₊₁₎ sont attribués selon le tableau ci-après en prenant en compte d'une part les étiquettes et vecteurs mouvements de l'image précédente t₍ⱼ₎ et d'autre part les étiquettes initiales ou déjà modifiées par la réception d'au moins un vecteur-mouvement de l'image en cours t₍ⱼ₊₁₎, tableau dans lequel D1 désigne le vecteur-mouvement d'un pixel origine dans l'image t₍ⱼ₎, D2 le vecteur-mouvement d'un pixel de l'image courante t₍ⱼ₊₁₎ ayant déjà reçu au moins un vecteur-mouvement et min (:DFD(D1):,:DFD(D2):) représente le vecteur-mouvement qui deviendra un vecteur mouvement de l'image courante t₍ⱼ₊₁₎, ce vecteur étant D1, si D1 minimise la différence inter image déplacée ou D2, si D2 minimise la différence inter image déplacée,

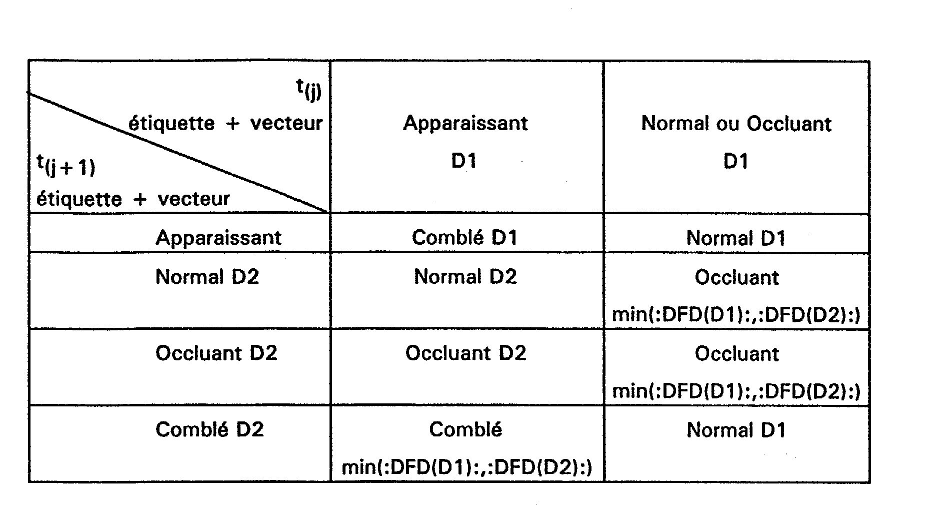

4. Procédé selon l'une quelconque des revendications 2 et 3, caractérisé en ce que le vecteur-mouvement d'un pixel de l'image courante t₍ⱼ₊₁₎ dont l'étiquette est restée "apparaissant" est obtenu par interpolation spatiale des vecteurs-mouvement de son voisinage.

5. Procédé selon la revendication 4, caractérisé en ce que le vecteur-mouvement d'un pixel de l'image courante t₍ⱼ₊₁₎ dont l'étiquette est restée "apparaissant" est obtenu en faisant la moyenne des vecteurs-mouvement des pixels qui font partie de son voisinage spatial, mais sans tenir compte des pixels de ce voisinage dont l'étiquette est également restée "apparaissant".

6. Procédé de définition d'un champ des vecteurs-mouvement des pixels d'une image appartenant à une séquence d'images animées t₍ⱼ₎, t₍ⱼ₊₁₎, l'indice j étant un nombre entier définissant l'ordre de l'image dans la séquence, deux images consécutives ayant un écart d'indice égal à 1, l'image courante étant référencée t₍ⱼ₊₁₎, l'image précédent l'image courante étant référencée t₍ⱼ₎, le procédé visant à attribuer à chaque pixel d'une image courante un vecteur de mouvement, le procédé comportant une première étape au cours de laquelle il est attribué aux pixels de l'image un vecteur prédictif de mouvement par projection sur l'image courante des vecteurs-mouvement de l'image précédente, puis un vecteur-mouvement estimé calculé à partir du vecteur prédictif et d'un estimateur récursif, procédé caractérisé en ce que le champ de vecteur prédictif est obtenu selon le procédé de l'une des revendications 3 à 5, le champ de vecteur estimé étant obtenu en utilisant le champ de vecteur prédictif ainsi obtenu et en ce que pour chaque pixel de l'image courante on compare le vecteur mouvement prédit et le vecteur-mouvement estimé de manière à modifier éventuellement les étiquettes affectées aux pixels de l'image courante t₍ⱼ₊₁₎ selon la procédure ci-après :
- si l'étiquette est "normal", elle reste "normal" ;
- si l'étiquette est "apparaissant", elle reste "apparaissant" ;
- si l'étiquette est "comblé", elle devient "normal" ;
- si l'étiquette est "occluant", on calcule pour chacune des composantes horizontales et verticales du vecteur-mouvement prédit et du vecteur-mouvement estimé leur différence et si l'une des différences est supérieure à un seuil, l'étiquette devient "normal" sinon elle reste "occluant".

7. Procédé selon la revendication 6, caractérisé en ce que l'étiquette "occluant" n'est validée que lorsque le pixel suivi le long de la séquence d'images a été marqué "occluant" au moins N fois, N étant un entier supérieur à 1.

8. Procédé selon la revendication 1, caractérisé en ce que, si lors de la projection temporelle du champ de mouvement de l'image précédente t₍ⱼ₎ sur l'image courante t₍ⱼ₊₁₎, le vecteur-mouvement projeté sur l'image courante t₍ⱼ₊₁₎ d'un pixel de l'image précédente tⱼ se trouve en conflit avec un autre vecteur et n'est pas retenu, alors le pixel de l'image t₍ⱼ₎ est étiqueté "disparaissant".

9. Procédé de définition d'un champ prédictif des vecteurs-mouvement des pixels d'une image à interpoler Tⱼ se trouvant temporellement entre deux images connues t₍ⱼ₎, t₍ⱼ₊₁₎ appartenant à une séquence d'images animées, l'indice j étant un nombre entier définissant l'ordre temporel de l'image dans la séquence, le procédé visant à attribuer à chaque pixel de l'image à interpoler T₍ⱼ₎ un vecteur prédictif de mouvement, ce vecteur prédictif dépendant d'un vecteur de mouvement estimé, attribué à un pixel de l'une des images t₍ⱼ₎, t₍ⱼ₊₁₎ ou t₍ⱼ₊₂₎, procédé caractérisé en ce que le vecteur-mouvement prédictif attribué à chaque pixel de l'image à interpoler T₍ⱼ₎ prend en compte au moins pour partie d'une part les résultats de la projection temporelle sur l'image à interpoler T₍ⱼ₎ des vecteurs-mouvement des images t₍ⱼ₎, t₍ⱼ₊₁₎ ou t₍ⱼ₊₂₎, mais aussi les résultats d'une attribution de classe aux pixels des images réelles t₍ⱼ₎, t₍ⱼ₊₁₎, t₍ⱼ₊₂₎, et de l'image à interpoler T₍ⱼ₎, les pixels de chacune des classes étant définis par une même étiquette "normal" pour une première classe, "occluant" pour une seconde classe, "apparaissant" pour une troisième classe, "trou" pour une quatrième classe, l'étiquette "normal" signifiant que le pixel qui en est affecté est présent dans deux images successives, "apparaissant" signifiant que le pixel qui en est affecté n'est pas présent dans une image consécutive précédente, et "occluant" signifiant que le pixel qui en est affecté est un pixel appartenant à un objet d'avant-plan qui vient masquer un objet d'arrière-plan d'une image précédente, les étiquettes "trou" étant les étiquettes d'un état initial des images à interpoler, procédé caractérisé en ce que dans une première phase, les étiquettes et les vecteurs-mouvement de l'image à interpoler T₍ⱼ₎ sont attribués selon le tableau ci-après en prenant en compte d'une part les étiquettes et vecteurs-mouvement estimés de l'image réelle t₍ⱼ₊₁₎, et d'autre part les étiquettes initiales ou déjà modifiées de l'image T₍ⱼ₎ par réception d'au moins un vecteur-mouvement de l'image réelle t₍ⱼ₊₁₎, tableau dans lequel D1 désigne le vecteur-mouvement d'un pixel origine dans l'image réelle t₍ⱼ₊₁₎, D2 le vecteur-mouvement d'un pixel de l'image à interpoler T₍ⱼ₎ ayant déjà reçu au moins un vecteur-mouvement, DFD désigne la différence inter image déplacée et S un seuil.

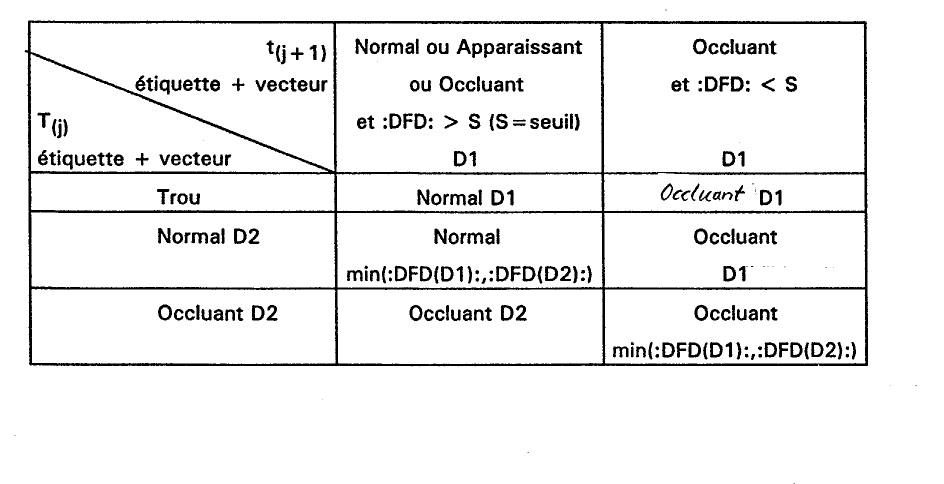

10. Procédé selon la revendication 9, caractérisé en ce que dans une seconde phase, les vecteurs de l'image à interpoler T₍ⱼ₎ qui sont restés étiquetés "trou" reçoivent un vecteur-mouvement obtenu par interpolation spatiale.

11. Procédé selon l'une des revendications 9 ou 10, caractérisé en ce que pour chaque pixel de l'image à interpoler T₍ⱼ₎ étiqueté "normal" ou "occluant", la luminance de ce pixel est le résultat d'une interpolation entre la luminance de deux pixels, un premier et un second, le premier pixel situé sur l'image t₍ⱼ₊₁₎ étant le pixel dont la projection a été reçue et retenue par ce pixel de l'image T₍ⱼ₎, le second pixel étant le pixel de l'image t₍ⱼ₎ dont la projection sur t₍ⱼ₊₁₎ a été reçue et retenue par le premier pixel, et en ce que pour chaque pixel de l'image T₍ⱼ₎ étiqueté "trou" à l'issue de la première phase, la luminance de ce pixel de T₍ⱼ₎ est obtenue de la façon ci-après en fonction des étiquettes de chacun des quatre pixels encadrant les deux extrémités du vecteur-mouvement sur les images t₍ⱼ₎, t₍ⱼ₊₁₎ :
- si sur l'image t₍ⱼ₊₁₎, au moins l'un des quatre pixels encadrant l'extrémité du vecteur-mouvement est étiqueté "occluant" et si, sur l'image t₍ⱼ₎ aucun des quatre pixels encadrant l'extrémité du vecteur-mouvement n'est étiqueté "occluant", on ne construit la luminance du pixel de l'image T₍ⱼ₎ qu'à partir de l'image t₍ⱼ₎ ;
- si sur l'image t₍ⱼ₎, au moins l'un des quatre pixels encadrant l'extrémité du vecteur-mouvement est étiqueté "occluant" et si sur l'image t₍ⱼ₊₁₎ aucun des quatre pixels encadrant l'extrémité du vecteur-mouvement n'est étiqueté "occluant", on ne reconstruit la luminance du pixel de l'image T₍ⱼ₎ qu'à partir de l'image t₍ⱼ₊₁₎ ;
- si aux deux extrémités du vecteur-mouvement, au moins l'un des quatre pixels est étiqueté "occluant" ou aucun pixel n'est étiqueté "occluant", on reconstruit la luminance du pixel de l'image T₍ⱼ₎ à partir des deux images.

12. Procédé selon l'une des revendications 9 ou 10, caractérisé en ce que l'on attribue une cinquième classe aux pixels des images réelles, les pixels appartenant à cette classe étant étiquetés "disparaissant", ces pixels ne pouvant se trouver que dans l'image t₍ⱼ₎ précédant l'image à interpoler T₍ⱼ₎, les pixels recevant cette étiquette étant ceux dont la projection dans l'image réelle t₍ⱼ₊₁₎ a été écartée au cours de la projection temporelle de l'image t₍ⱼ₎ sur l'image t₍ⱼ₊₁₎, et en ce que pour chaque pixel de l'image à interpoler T₍ⱼ₎ étiqueté "normal" ou "occluant" la luminance de ce pixel est le résultat d'une interpolation entre la luminance de deux pixels, un premier et un second, le premier pixel situé sur l'image t₍ⱼ₊₁₎ étant le pixel dont la projection a été reçue et retenue par ce pixel de l'image T₍ⱼ₎, le second pixel étant le pixel de t₍ⱼ₎ dont la projection a été reçue et retenue par le premier pixel, et en ce que pour chaque pixel de l'image T₍ⱼ₎ étiqueté "trou" à l'issue de la première phase la luminance de ce pixel de l'image à interpoler T₍ⱼ₎ est obtenue de la façon ci-après en fonction des étiquettes de chacun des quatre pixels encadrant les deux extrémités du vecteur-mouvement sur les images t₍ⱼ₎ et t₍ⱼ₊₁₎ :
- si, sur l'image t₍ⱼ₎, l'un des quatre pixels encadrant l'extrémité du vecteur-mouvement est étiqueté "occluant" et aucun n'est "disparaissant", et si sur l'image t₍ⱼ₊₁₎ l'un des quatre pixels encadrant l'extrémité du vecteur-mouvement est étiqueté "apparaissant", on ne reconstruit la luminance du pixel de l'image T₍ⱼ₎ qu'à partir de l'image t₍ⱼ₊₁₎ ;
- si, sur l'image t₍ⱼ₊₁₎, l'un des quatre pixels encadrant l'extrémité du vecteur-mouvement est étiqueté "occluant" et aucun n'est "apparaissant" et si sur l'image t₍ⱼ₎ l'un des quatre pixels encadrant l'extrémité du vecteur-mouvement est étiqueté "disparaissant", on ne reconstruit la luminance du pixel de l'image T₍ⱼ₎ qu'à partir de l'image t₍ⱼ₎ ;
- dans les autres cas, la luminance du pixel de l'image T₍ⱼ₎ est reconstruite à partir des images t₍ⱼ₊₁₎ et t₍ⱼ₎.

13. Procédé selon la revendication 9, caractérisé en ce que l'on attribue une cinquième classe aux pixels des images réelles, les pixels appartenant à cette classe étant étiquetés "disparaissant", ces pixels ne pouvant se trouver que dans l'image t₍ⱼ₎ précédant l'image à interpoler T₍ⱼ₎, les pixels recevant cette étiquette étant ceux dont la projection dans l'image réelle t₍ⱼ₊₁₎ a été écartée au cours de la projection temporelle de l'image t₍ⱼ₎ sur l'image t₍ⱼ₊₁₎, et en ce que lors de la projection du champ de mouvement de l'image réelle t₍ⱼ₊₁₎ sur l'image à interpoler T₍ⱼ₎, on ne projette pas le vecteur-mouvement des pixels de l'image t₍ⱼ₊₁₎ étiquetés "apparaissant", ensuite on réalise la projection du champ de mouvement des pixels de l'image t₍ⱼ₎ précédant l'image à interpoler T₍ⱼ₎ sur l'image T₍ⱼ₎ en utilisant le même procédé que pour la projection de l'image t₍ⱼ₊₁₎ sur l'image à interpoler T₍ⱼ₎, seuls étant retenus de cette projection les vecteurs qui sont reçus par un pixel de l'image à interpoler T₍ⱼ₎ encore étiqueté "trou" à l'issue de la projection de l'image t₍ⱼ₊₁₎, le pixel de l'image à interpoler T₍ⱼ₎ recevant un vecteur de l'image t₍ⱼ₎ étant alors étiqueté "disparaissant", ensuite on réalise la projection temporelle sur l'image à interpoler T₍ⱼ₎ du champ de vecteur de l'image réelle t₍ⱼ₊₂₎ en ne retenant de cette projection que les vecteurs de l'image réelle t₍ⱼ₊₂₎ qui sont reçus par des pixels encore étiquetés "trou" à l'issue des deux projections temporelles précédentes, de tels pixels recevant alors l'étiquette "apparaissant".

14. Procédé selon la revendication 13, caractérisé en ce que le vecteur-mouvement d'un pixel de l'image à interpoler T₍ⱼ₎ encore affecté d'une étiquette "trou" à l'issue des projections temporelles des images t₍ⱼ₊₁₎, t₍ⱼ₎ et t₍ⱼ₊₂₎ est calculé par interpolation spatiale et le pixel est affecté d'une étiquette "normal".

15. Procédé selon l'une quelconque des revendications 13 ou 14, caractérisé en ce que :
- les pixels de l'image T₍ⱼ₎ étiquetés "normal" sont interpolés à partir des deux images l'encadrant t₍ⱼ₎ et t₍ⱼ₊₁₎ ;
- les pixels de l'image T₍ⱼ₎ étiquetés "disparaissant" sont interpolés à partir de l'image t₍ⱼ₎, et
- les pixels de l'image T₍ⱼ₎ étiquetés "apparaissant" sont interpolés à partir de l'image t₍ⱼ₊₁₎.

## Claims

1. Method for defining a predictive field of the motion vectors of the pixels of an image belonging to a sequence of moving images t₍ⱼ₎, t₍ⱼ₊₁₎, the index j being an integer defining the order of the image in the sequence, two consecutive images having a difference of index equal to 1, the current image being referenced t₍ⱼ₊₁₎, the image preceding the current image t₍ⱼ₊₁₎ being referenced t₍ⱼ₎, the method aiming to allocate to each pixel of a current image of the sequence, a predictive vector of motions, this predictive vector depending on a motion vector allocated to a pixel of the preceding image t₍ⱼ₎ of which the pixel of the current image is considered to be the temporal projection, in which method the predictive motion vector allocated to each pixel of the current image t₍ⱼ₊₁₎ takes into account at least in part the results of the temporal projection of the motion vectors of the pixels of the preceding image t₍ⱼ₎, and characterized in that it also takes into account the results of a classification of the pixels of this image into at least three classes, the pixels of each of the classes being defined by one and the same "normal" tag for a first class, "occluding" for a second class and "appearing" for a third class, allocation of a predictive vector of motions as a function of the tag and of the class of the original pixel of the projection being carried out as follows:
- initially all the pixels of the current image t₍ⱼ₊₁₎ are tagged "appearing",
- depending on the result of the temporal projection performed from the preceding image t₍ⱼ₎, the pixels of the current image t₍ⱼ₊₁₎ which receive at least one vector arising from the preceding image t₍ⱼ₎ are assigned a tag and a predictive vector of motions according to the following rules:
- if a pixel of the current image t₍ⱼ₊₁₎ tagged "appearing" receives a motion vector, its tag becomes "normal",
- if a pixel tagged "normal" receives another motion vector, its tag becomes "occluding" and it is assigned the motion vector of the original pixel in t₍ⱼ₎ which minimizes the displaced inter-image difference (DFD),
- if a pixel tagged "occluding" receives at least one other motion vector, its tag remains "occluding" and it is assigned the motion vector of one of the original pixels which minimizes the displaced inter-image difference (DFD),
- if a pixel tagged "appearing" has received no motion vector in the course of the temporal projection of the vectors of the preceding image t₍ⱼ₎, it remains tagged "appearing".

2. Method according to Claim 1, characterized in that the motion vector of a pixel of the preceding image t₍ⱼ₎ tagged "appearing" is not allocated to the pixel of the current image t₍ⱼ₊₁₎ receiving the motion vector of this pixel of the preceding image.

3. Method according to Claim 1, characterized in that it includes a fourth class whose pixels receive the tag "filled-in" and in that the tags and the motion vectors of the current image t₍ⱼ₊₁₎ are allocated according to the table below by taking into account on the one hand the tags and motion vectors of the preceding image t₍ⱼ₎ and on the other hand the initial tags or those already modified by the reception of at least one motion vector of the current image t₍ⱼ₊₁₎, in which table D1 denotes the motion vector of an original pixel in the image t_{(j),} D2 the motion vector of a pixel of the current image t₍ⱼ₊₁₎ and which has already received at least one motion vector and min (:DFD(D1):,:DFD(D2):) represents the motion vector which will become a motion vector of the current image t₍ⱼ₊₁₎, this vector being D1, if D1 minimizes the displaced inter-image difference or D2, if D2 minimizes the displaced inter-image difference,

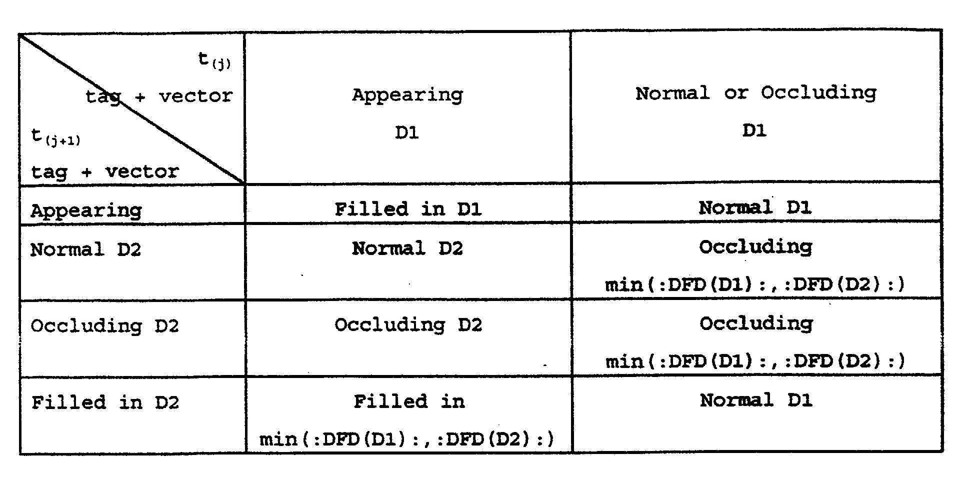

4. Method according to either one of Claims 2 or 3, characterized in that the motion vector of a pixel of the current image t₍ⱼ₊₁₎, whose tag has remained "appearing", is obtained by spatial interpolation of the motion vectors of its neighbourhood.

5. Method according to Claim 4, characterized in that the motion vector of a pixel of the current image t₍ⱼ₊₁₎, whose tag has remained "appearing", is obtained by taking a mean of the motion vectors of the pixels which form part of its spatial neighbourhood without however taking account of the pixels of this neighbourhood whose tag has also remained "appearing".

6. Method for defining a field of the motion vectors of the pixels of an image belonging to a sequence of moving images t₍ⱼ₎, t₍ⱼ₊₁₎, the index j being an integer defining the order of the image in the sequence, two consecutive images having a difference of index equal to 1, the current image being referenced t₍ⱼ₊₁₎, the image preceding the current image being referenced t₍ⱼ₎, the method aiming to allocate to each pixel of a current image a motion vector, the method including a first step in the course of which there is allocated to the pixels of the image a predictive vector of motion by projecting onto the current image the motion vectors of the preceding image, then an estimated motion vector calculated from the predictive vector and from a recursive estimator, a method characterized in that the predictive vector field is obtained according to the method of one of Claims 3 to 5, the estimated vector field being obtained by using the predictive vector field thus obtained and in that for each pixel of the current image the predicted motion vector and the estimated motion vector are compared in such a way as possibly to modify the tags assigned to the pixels of the current image t₍ⱼ₊₁₎ according to the following procedure:
- if the tag is "normal", it remains "normal";
- if the tag is "appearing", it remains "appearing";
- if the tag is "filled-in", it becomes "normal";
- if the tag is "occluding", then for each of the horizontal and vertical components of the predicted motion vector and of the estimated motion vector, their difference is calculated and if one of the differences is greater than a threshold, the tag becomes "normal", otherwise it remains "occluding".

7. Method according to Claim 6, characterized in that the "occluding" tag is affirmed only when the pixel following in the sequence of images has been labelled "occluding" at least N times, N being an integer greater than 1.

8. Method according to Claim 1, characterized in that, if during the temporal projection of the field of motion of the preceding image t₍ⱼ₎ onto the current image t₍ⱼ₊₁₎, the motion vector projected onto the current image t₍ⱼ₊₁₎ of a pixel of the preceding image tⱼ conflicts with another vector and is not retained, then the pixel of the image t₍ⱼ₎ is tagged "disappearing".

9. Method of defining a predictive field of motion vectors of the pixels of an image to be interpolated Tⱼ lying temporally between two known images t₍ⱼ₎, t₍ⱼ₊₁₎ belonging to a sequence of moving images, the index j being an integer defining the temporal order of the image in the sequence, the method aiming to allocate to each pixel of the image to be interpolated T₍ⱼ₎ a predictive vector of motion, this predictive vector depending on an estimated motion vector, allocated to a pixel of one of the images t₍ⱼ₎, t₍ⱼ₊₁₎ or t₍ⱼ₊₂₎, a method characterized in that the predictive motion vector allocated to each pixel of the image to be interpolated T₍ⱼ₎ takes into account at least in part on the one hand the results of the temporal projection onto the image to be interpolated T₍ⱼ₎ of the motion vectors of the images t₍ⱼ₎, t₍ⱼ₊₁₎ or t₍ⱼ₊₂₎, but also the results of an allocation of class to the pixels of the actual images t₍ⱼ₎, t₍ⱼ₊₁₎, t₍ⱼ₊₂₎, and of the image to be interpolated T₍ⱼ₎, the pixels of each of the classes being defined by one and the same "normal" tag for a first class, "occluding" for a second class, "appearing" for a third class, "hole" for a fourth class, the tag "normal" signifying that the pixel assigned thereto is present in two successive images, "appearing" signifying that the pixel assigned thereto is not present in a preceding consecutive image, and "occluding" signifying that the pixel assigned thereto is a pixel belonging to a foreground object which will mask a background object of a preceding image, the "hole" tags being the tags of an initial state of the images to be interpolated, a method characterized in that in a first phase, the tags and the motion vectors of the image to be interpolated T₍ⱼ₎ are allocated according to the table below taking into account on the one hand the tags and estimated motion vectors of the actual image t₍ⱼ₊₁₎, and on the other hand the initial tags or those already modified of the image T₍ⱼ₎ by reception of at least one motion vector of the actual image t₍ⱼ₊₁₎, in which table D1 denotes the motion vector of an original pixel in the actual image t₍ⱼ₊₁₎, D2 the motion vector of a pixel of the image to be interpolated T₍ⱼ₎ and which has already received at least one motion vector, DFD denotes the displaced inter-image difference and S a threshold.

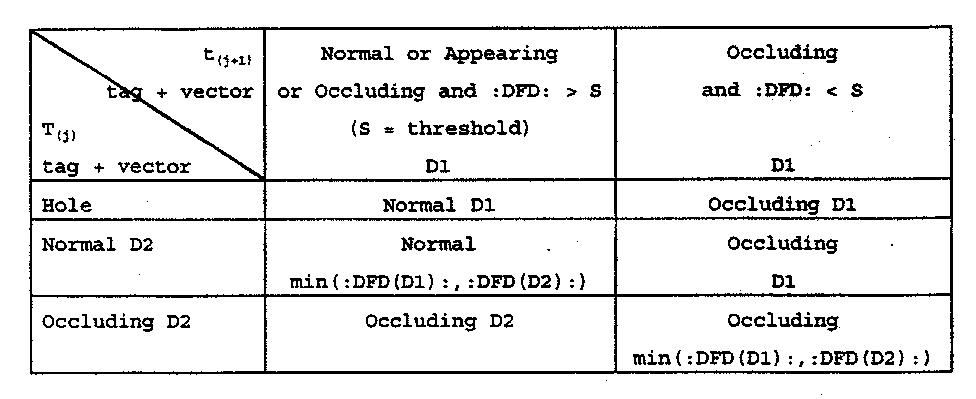

10. Method according to Claim 9, characterized in that in a second phase, the vectors of the image to be interpolated T₍ⱼ₎ which have remained tagged "hole" receive a motion vector obtained by spatial interpolation.

11. Method according to one of Claims 9 or 10, characterized in that for each pixel of the image to be interpolated T₍ⱼ₎ tagged "normal" or "occluding", the luminance of this pixel is the result of an interpolation between the luminance of two pixels, a first and a second, the first pixel situated in the image t₍ⱼ₊₁₎ being the pixel whose projection has been received and retained by this pixel of the image T₍ⱼ₎, the second pixel being the pixel of the image t₍ⱼ₎ whose projection onto t₍ⱼ₊₁₎ has been received and retained by the first pixel, and in that for each pixel of the image T₍ⱼ₎ tagged "hole" at the completion of the first phase, the luminance of this pixel of T₍ⱼ₎ is obtained in the manner below as a function of the tags of each of the four pixels enclosing the two ends of the motion vector in the images t₍ⱼ₎, t₍ⱼ₊₁₎:
- if in the image t₍ⱼ₊₁₎, at least one of the four pixels enclosing the end of the motion vector is tagged "occluding" and if, in the image t₍ⱼ₎ none of the four pixels enclosing the end of the motion vector is tagged "occluding", the luminance of the pixel of the image T₍ⱼ₎ is constructed from the image t₍ⱼ₎ alone;
- if in the image t₍ⱼ₎, at least one of the four pixels enclosing the end of the motion vector is tagged "occluding" and if in the image t₍ⱼ₊₁₎ none of the four pixels enclosing the end of the motion vector is tagged "occluding", the luminance of the pixel of the image T₍ⱼ₎ is reconstructed from the image t₍ⱼ₊₁₎ alone;
- if at the two ends of the motion vector, at least one of the four pixels is tagged "occluding" or no pixel is tagged "occluding", the luminance of the pixel of the image T₍ⱼ₎ is reconstructed from the two images.

12. Method according to one of Claims 9 or 10, characterized in that a fifth class is allocated to the pixels of the actual images, the pixels belonging to this class being tagged "disappearing", these pixels being able to lie only in the image t₍ⱼ₎ preceding the image to be interpolated T₍ⱼ₎, the pixels receiving this tag being those whose projection in the actual image t₍ⱼ₊₁₎ has been discarded in the course of the temporal projection of the image t₍ⱼ₎ onto the image t₍ⱼ₊₁₎, and in that for each pixel of the image to be interpolated T₍ⱼ₎ tagged "normal" or "occluding", the luminance of this pixel is the result of an interpolation between the luminance of two pixels, a first and a second, the first pixel situated in the image t₍ⱼ₊₁₎ being the pixel whose projection has been received and retained by this pixel of the image T₍ⱼ₎, the second pixel being the pixel of t₍ⱼ₎ whose projection has been received and retained by the first pixel, and in that for each pixel of the image T₍ⱼ₎ tagged "hole" at the completion of the first phase, the luminance of this pixel of the image to be interpolated T₍ⱼ₎ is obtained in the manner below as a function of the tags of each of the four pixels enclosing the two ends of the motion vector in the images t₍ⱼ₎ and t₍ⱼ₊₁₎:
- if, in the image t₍ⱼ₎, one of the four pixels enclosing the end of the motion vector is tagged "occluding" and none is "disappearing", and if in the image t₍ⱼ₊₁₎ one of the four pixels enclosing the end of the motion vector is tagged "appearing", the luminance of the pixel of the image T₍ⱼ₎ is reconstructed from the image t₍ⱼ₊₁₎ alone;
- if, in the image t₍ⱼ₊₁₎, one of the four pixels enclosing the end of the motion vector is tagged "occluding" and none is "appearing" and if in the image t₍ⱼ₎ one of the four pixels enclosing the end of the motion vector is tagged "disappearing", the luminance of the pixel of the image T₍ⱼ₎ is reconstructed from the image t₍ⱼ₎ alone;
- in the other cases, the luminance of the pixel of the image T₍ⱼ₎ is reconstructed from the images t₍ⱼ₊₁₎ and t₍ⱼ₎.

13. Method according to Claim 9, characterized in that a fifth class is allocated to the pixels of the actual images, the pixels belonging to this class being tagged "disappearing", these pixels being able to lie only in the image t₍ⱼ₎ preceding the image to be interpolated T₍ⱼ₎, the pixels receiving this tag being those whose projection in the actual image t₍ⱼ₊₁₎ has been discarded in the course of the temporal projection of the image t₍ⱼ₎ onto the image t₍ⱼ₊₁₎, and in that during the projection of the field of motion of the actual image t₍ⱼ₊₁₎ onto the image to be interpolated T₍ⱼ₎, the motion vector of the pixels of the image t₍ⱼ₊₁₎ which are tagged "appearing" is not projected, next projection is carried out of the field of motion of the pixels of the image t₍ⱼ₎ preceding the image to be interpolated T₍ⱼ₎ onto the image T₍ⱼ₎ using the same method as for the projection of the image t₍ⱼ₊₁₎ onto the image to be interpolated T₍ⱼ₎, only those vectors being retained from this projection which are received by a pixel of the image to be interpolated T₍ⱼ₎ which is still tagged "hole" on completion of the projection of the image t₍ⱼ₊₁₎, the pixel of the image to be interpolated T₍ⱼ₎ receiving a vector of the image t₍ⱼ₎ then being tagged "disappearing", next the temporal projection is carried out onto the image to be interpolated T₍ⱼ₎ of the vector field of the actual image t₍ⱼ₊₂₎, retaining from this projection only the vectors of the actual image t₍ⱼ₊₂₎ which are received by pixels still tagged "hole" on completion of the two preceding temporal projections, such pixels then receiving the tag "appearing".

14. Method according to Claim 13, characterized in that the motion vector of a pixel of the image to be interpolated T₍ⱼ₎ still assigned a "hole" tag on completion of the temporal projections of the images t₍ⱼ₊₁₎, t₍ⱼ₎ and t₍ⱼ₊₂₎ is calculated by spatial interpolation and the pixel is assigned a "normal" tag.

15. Method according to either one of Claims 13 or 14, characterized in that:
- the pixels of the image T₍ⱼ₎ tagged "normal" are interpolated from the two images enclosing it t₍ⱼ₎ and t₍ⱼ₊₁₎;
- the pixels of the image T₍ⱼ₎ tagged "disappearing" are interpolated from the image t₍ⱼ₎, and
- the pixels of the image T₍ⱼ₎ tagged "appearing" are interpolated from the image t₍ⱼ₊₁₎.

## Patentansprüche

1. Verfahren zur Definition eines prädiktiven Bewegungsvektorfeldes der Bildpunkte eines Bildes, das zu einer Sequenz von Trickbildern t(j), t(j+1) gehört, wobei der Index j eine ganze Zahl ist, die die Ordnung des Bildes in der Sequenz definiert, wobei zwei aufeinanderfolgende Bilder einen Indexunterschied gleich 1 haben, wobei das aktuelle Bild mit t(j+1) bezeichnet wird, das dem aktuellen Bild t(j+1) vorhergehende Bild mit t(j) bezeichnet wird, wobei das Verfahren darauf zielt, jedem Bildpunkt eines aktuellen Bildes der Sequenz einen prädiktiven Bewegungsvektor zuzuweisen, wobei dieser prädiktive Vektor von einem Bewegungsvektor abhängt, der einem Bildpunkt des vorhergehenden Bildes t(j) zugeordnet ist, von dessen Bildpunkt des aktuellen Bildes angenommen wird, daß er die zeitliche Projektion ist, ein Verfahren, bei welchem der jedem Bildpunkt des aktuellen Bildes t(j+1) zugeordnete prädiktive Bewegungsvektor wenigstens zum Teil die Ergebnisse der zeitlichen Projektion der Bewegungsvektoren der Bildpunkte des vorhergehenden Bildes t(j) berücksichtigt, und das dadurch gekennzeichnet ist, daß es auch die Ergebnisse einer Klassifikation der Bildpunkte dieses Bildes in wenigstens drei Klassen berücksichtigt, wobei die Bildpunkte jeder der Klassen durch ein gemeinsames Etikett "normal" für eine erste Klasse, "verdeckend" für eine zweite Klasse und "auftauchend" für eine dritte Klasse definiert sind, wobei die Zuordnung eines prädiktiven Bewegungsvektors als Funktion des Etiketts und der Klasse des ursprünglichen Bildpunktes der Projektion in folgender Weise erfolgt:
- anfänglich werden alle Bildpunkte des aktuellen Bildes t(j+1) mit "auftauchend" etikettiert,
- gemäß dem Ergebnis der auf der Grundlage des vorhergehenden Bildes t(j) durchgeführten zeitlichen Projektion, wird den Bildpunkten des aktuellen Bildes t(j+1), die wenigstens einen Vektor aus Richtung des vorhergehende Bildes t(j) empfangen, ein Etikett und ein prädiktiver Bewegungsvektor gemäß den folgenden Regeln zugewiesen:
- falls ein Bildpunkt des mit "auftauchend" etikettierten aktuellen Bildes t(j+1) einen Bewegungsvektor empfängt, wird sein Etikett "normal",
- falls ein mit "normal" etikettierter Bildpunkt einen weiteren Bewegungsvektor empfängt, wird sein Etikett "verdeckend" und ihm wird derjenige Bewegungsvektor des ursprünglichen Bildpunktes in t(j) zugewiesen, der die "displaced frame difference" (DFD) minimiert,
- falls ein mit "verdeckend" etikettierter Bildpunkt wenigstens einen weiteren Bewegungsvektor empfängt, bleibt sein Etikett "verdeckend" und ihm wird der Bewegungsvektor des einen der ursprünglichen Bildpunkte zugewiesen, der die "displaced frame difference" (DFD) minimiert,
- falls ein mit "auftauchend" etikettierter Bildpunkt im Laufe der zeitlichen Projektion der Vektoren des vorhergehenden Bildes t(j) keinen Bewegungsvektor empfangen hat, bleibt er mit "auftauchend" etikettiert.

2. Verfahren nach Anspruch 1, dadurch gekennzeichnet, daß der Bewegungsvektor eines Bildpunktes des vorhergehenden, mit "auftauchend" etikettierten Bildes t(j) dem Bildpunkt des aktuellen Bildes t(j+1), das den Bewegungsvektor dieses Bildpunktes des vorhergehenden Bildes empfängt, nicht zugewiesen wird.

3. Verfahren nach Anspruch 1, dadurch gekennzeichnet, daß es eine vierte Klasse umfaßt, deren Bildpunkte das Etikett "gefüllt" erhalten, und dadurch, daß die Etiketten und die Bewegungsvektoren des aktuellen Bildes t(j+1) gemäß der folgenden Tabelle zugewiesen werden, indem einerseits die Etiketten und Bewegungsvektoren des vorhergehenden Bildes t(j) und andererseits die anfänglichen oder bereits durch den Empfang wenigstens eines Bewegungsvektors des aktuellen Bildes t(j) geänderten Etiketten berücksichtigt werden, wobei D1 in der Tabelle den Bewegungsvektor eines ursprünglichen Bildpunktes im Bild t(j) bezeichnet, D2 den Bewegungsvektor eines Bildpunkts des aktuellen Bildes t(j+1), der bereits wenigstens einen Bewegungsvektor empfangen hat, und min (:DFD(D1):,:DFD(D2):) den Bewegungsvektor darstellt, der zu einem Bewegungsvektor des aktuellen Bildes t(j+1) werden wird, wobei dieser Vektor D1 ist, falls D1 die "displaced frame difference" DFD. minimiert, oder D2, falls D2 die "displaced frame difference" DFD minimiert.

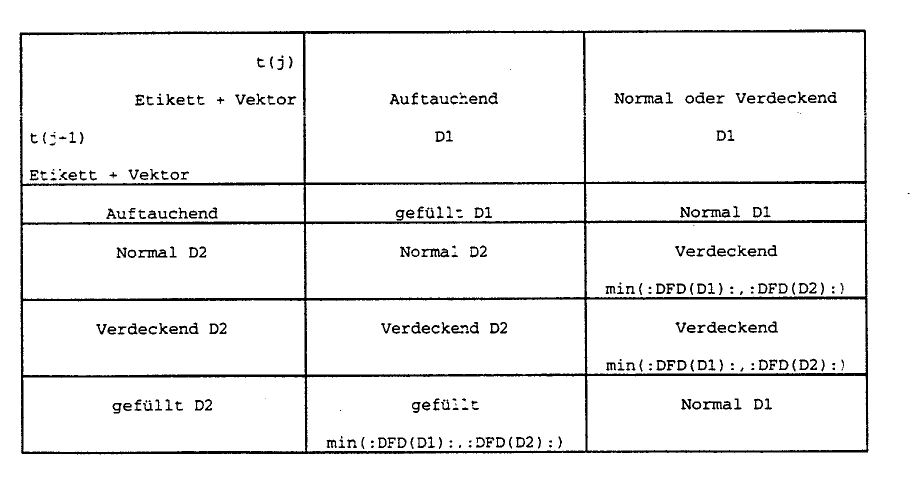

4. Verfahren nach einem der Ansprüche 2 und 3, dadurch gekennzeichnet, daß der Bewegungsvektor eines Bildpunktes des aktuellen Bildes t(j+1), dessen Etikett "auftauchend" geblieben ist, durch räumliche Interpolation der Bewegungsvektoren seiner Umgebung erhalten wird.

5. Verfahren nach Anspruch 4, dadurch gekennzeichnet, daß der Bewegungsvektor eines Bildpunktes des aktuellen Bildes t(j+1), dessen Etikett "auftauchend" geblieben ist, dadurch erhalten wird, daß das Mittel der Bewegungsvektoren der Bildpunkte gebildet wird, die Teil seiner räumlichen Umgebung sind, aber ohne Bildpunkte dieser Umgebung zu berücksichtigen, deren Etikett ebenfalls "auftauchend" geblieben ist.

6. Verfahren zur Definition eines Bewegungsvektorfeldes der Bildpunkt eines Bildes, das einer Sequenz von Trickbildern t(j), t(j+1) angehört, wobei der Index j eine ganze Zahl ist, die die Ordnung des Bildes in der Sequenz definiert, wobei zwei aufeinanderfolgende Bilder einen Indexabstand gleich 1 haben, wobei das aktuelle Bild mit t(j+1) bezeichnet wird, das dem aktuellen Bild vorhergehende Bild mit t(j) bezeichnet wird, wobei das Verfahren darauf zielt, jedem Bildpunkt eines aktuellen Bildes einen Bewegungsvektor zuzuweisen, wobei das Verfahren einen ersten Abschnitt aufweist, im Laufe dessen den Bildpunkten des Bildes ein prädiktiver Bewegungsvektor durch Projektion der Bewegungsvektoren des vorhergehenden Bildes auf das aktuelle Bild zugewiesen wird, dann auf der Grundlage des prädiktiven Vektors und einer rekursiven Schätzfunktion ein geschätzter Bewegungsvektor berechnet wird, wobei das Verfahren dadurch gekennzeichnet ist, daß das prädiktive Vektorfeld gemäß dem Verfahren nach einem der Ansprüche 3 bis 5 erhalten wird, wobei das geschätzte Vektorfeld dadurch erhalten wird, daß das derart erhaltene prädiktive Vektorfeld verwendet wird, und dadurch, daß für jeden Bildpunkt des aktuellen Bildes der vorhergesagte Bewegungsvektor und der geschätzte Bewegungsvektor verglichen werden, um so gegebenenfalls die den Bildpunkten des aktuellen Bildes t(j+1) zugewiesenen Etiketten gemäß dem folgenden Verfahren zu ändern:
- falls das Etikett "normal" ist, bleibt es "normal";
- falls das Etikett "auftauchend" ist, bleibt es "auftauchend";
- falls das Etikett "gefüllt" ist, wird es "normal";
- falls das Etikett "verdeckend" ist, wird für jede der horizontalen und vertikalen Komponenten des vorhergesagten Bewegungsvektors und des geschätzten Bewegungsvektors ihr Unterschied berechnet und falls einer der Unterschiede größer als ein Grenzwert ist, wird das Etikett "normal", andernfalls bleibt es "verdeckend".

7. Verfahren nach Anspruch 6, dadurch gekennzeichnet, daß das Etikett "verdeckend" nur dann gültig ist, wenn der längs der Bildsequenz verfolgte Bildpunkt wenigstens N-Mal mit "verdeckend" etikettiert wurde, wobei N eine ganze Zahl größer 1 ist.

8. Verfahren nach Anspruch 1, dadurch gekennzeichnet, daß, falls sich während der zeitlichen Projektion des Bewegungsfeldes des vorhergehenden Bildes t(j) auf das aktuelle Bild t(j+1) der auf das aktuelle Bild t(j+1) projizierte Bewegungsvektor eines Bildpunktes des vorhergehenden Bildes t(j) in Konflikt mit einem anderen Vektor befindet und nicht beibehalten wird, daß dann der Bildpunkt des Bildes t(j) mit "verschwindend" etikettiert wird.

9. Verfahren zur Definition eines prädiktiven Bewegungsvektorfeldes der Bildpunkte eines zu interpolierenden Bildes T(j), das sich zeitlich zwischen zwei bekannten Bildern t(j), t(j+1) befindet, die einer Sequenz von Trickbildern angehören, wobei der Index j eine ganze Zahl ist, die die zeitliche Ordnung des Bildes in der Sequenz definiert, wobei das verfahren darauf zielt, jedem Bildpunkt des zu interpolierenden Bildes T(j) einen prädiktiven Bewegungsvektor zuzuordnen, wobei dieser prädiktive Vektor von einem geschätzten Bewegungsvektor abhängt, der einem Bildpunkt eines der Bilder t(j), t(j+1) oder t(j+2) zugeordnet ist, wobei das Verfahren dadurch gekennzeichnet ist, daß der jedem Bildpunkt des zu interpolierenden Bildes T(j) zugeordnete prädiktive Bewegungsvektor wenigstens zum Teil einerseits die Ergebnisse der zeitlichen Projektion der Bewegungsvektoren der Bilder t(j), t(j+1) oder t(j+2) auf das zu interpolierende Bild T(j) berücksichtigt, jedoch auch die Ergebnisse einer Klassenzuordnung der Bildpunkte der reellen Bilder t(j), t(j+1), t(j+2) und des zu interpolierenden Bildes T(j), wobei die Bildpunkte jeder der Klassen durch ein gemeinsames Etikett "normal" für eine erste Klasse, "verdeckend" für eine zweite Klasse, "auftauchend" für eine dritte Klasse, "Loch" für eine vierte Klasse definiert werden, wobei das Etikett "normal" angibt, daß der Bildpunkt, dem es zugewiesen ist, in zwei aufeinanderfolgenden Bildern vorhanden ist, "auftauchend" angibt, daß der Bildpunkt, dem es zugewiesen ist, in einem unmittelbar vorhergehenden nicht vorhanden ist, und "verdeckend" angibt, daß der Bildpunkt, dem es zugewiesen ist, ein einem Objekt des Vordergrundes angehörender Bildpunkt ist, das gerade ein Objekt des Hintergrundes eines vorhergehenden Bildes maskiert hat, wobei die Etiketten "Loch" die Etiketten eines anfänglichen Zustandes der zu interpolierenden Bilder sind, wobei das Verfahren dadurch gekennzeichnet ist, daß in einer ersten Phase die Etiketten und die Bewegungsvektoren des zu interpolierenden Bildes T(j) gemäß der folgenden Tabelle zugewiesen werden, indem einerseits die Etiketten und die geschätzten Bewegungsvektoren des reellen Bildes t(j+1) und andererseits die anfänglichen oder bereits durch Empfang wenigstens eines Bewegungsvektors des reellen Bildes t(j+1) geänderten Etiketten des Bildes T(j) berücksichtigt werden, wobei D1 in der Tabelle den Bewegungsvektor eines ursprünglichen Bildpunktes in dem reellen Bild t(j+1) bezeichnet, D2 den Bewegungsvektor des zu interpolierenden Bildes T(j), der bereits wenigstens einen Bewegungsvektor empfangen hat, DFD die "displaced frame difference" und S einen Grenzwert bezeichnet.

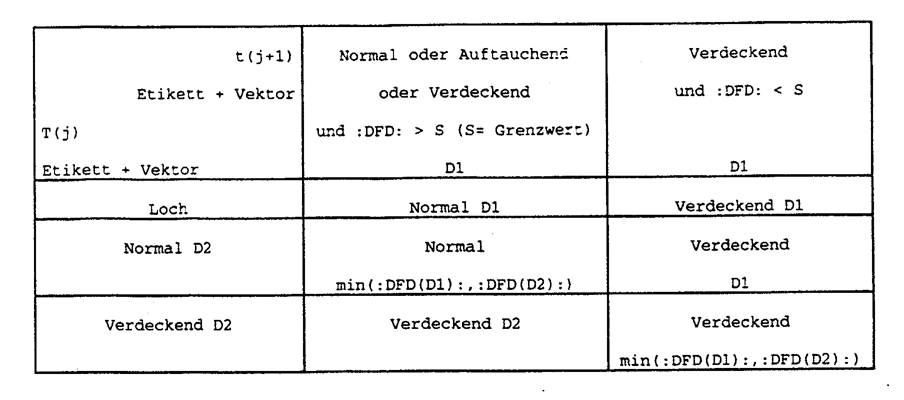

10. Verfahren nach Anspruch 9, dadurch gekennzeichnet, daß in einer zweiten Phase die Vektoren des zu interpolierenden Bildes T(j), die mit "Loch" etikettiert blieben, einen Bewegungsvektor empfangen, der durch räumliche Interpolation erhalten wird.

11. Verfahren nach einem der Ansprüche 9 oder 10, dadurch gekennzeichnet, daß für jeden mit "normal" oder "verdeckend" etikettierten Bildpunkt des zu interpolierenden Bildes T(j), die Luminanz dieses Bildpunktes das Ergebnis einer Interpolation zwischen der Luminanz von zwei Bildpunkten ist, einem ersten und einem zweiten, wobei der erste, auf dem Bild t(j+1) liegende Bildpunkt derjenige Bildpunkt ist, dessen Projektion von diesem Bildpunkt des Bildes T(j) empfangen und beibehalten wurde, wobei der zweite Bildpunkt derjenige Bildpunkt des Bildes t(j) ist, dessen Projektion auf t(j+1) von dem ersten Bildpunkt empfangen und beibehalten wurde, und dadurch, daß für jeden am Ende der ersten Phase mit "Loch" etikettierten Bildpunkt des Bildes T(j) die Luminanz dieses Bildpunkt von T(j) in der folgenden Weise als Funktion der Etiketten von jedem der vier Bildpunkte erhalten wird, die die zwei Endpunkte des Bewegungsvektor auf den Bildern t(j), t(j+1) einrahmen:
- falls auf dem Bild t(j+1) wenigstens einer der vier den Endpunkt des Bewegungsvektors einrahmenden Bildpunkte mit "verdeckend" etikettiert ist und falls auf dem Bild t(j) keiner der vier den Endpunkt des Bewegungsvektors einrahmenden Bildpunkt mit "verdeckend" etikettiert ist, wird die Luminanz des Bildpunktes des Bildes T(j) nur auf der Grundlage des Bildes t(j) rekonstruiert;
- falls auf dem Bild t(j) wenigstens einer der vier den Endpunkt des Bewegungsvektors einrahmenden Bildpunkte mit "verdeckend" etikettiert ist und falls auf dem Bild t(j+1) keiner der vier den Endpunkt des Bewegungsvektors einrahmenden Bildpunkte mit "verdeckend" etikettiert ist, wird die Luminanz des Bildpunktes des Bildes T(j) nur auf der Grundlage des Bildes t(j+1) rekonstruiert;
- falls an den zwei Rndpunkten des Bewegungsvektors wenigstens einer der vier Bildpunkte mit "verdeckend" etikettiert ist oder kein Bildpunkt mit "verdeckend" etikettiert ist, wird die Luminanz des Bildpunktes des Bildes T(j) auf der Grundlage der zwei Bilder rekonstruiert.

12. Verfahren nach einem der Ansprüche 9 oder 10, dadurch gekennzeichnet, daß den Bildpunkten des reellen Bildes eine fünfte Klasse zugewiesen wird, wobei die dieser Klasse zugehörigen Bildpunkte mit "verschwindend" etikettiert werden, wobei diese Bildpunkte sich nur in dem Bild t(j) befinden können, das dem zu interpolierenden Bild T(j) vorhergeht, wobei die Bildpunkte, die dieses Etikett empfangen, diejenigen sind, deren Projektion in dem reellen Bild t(j+1) im Laufe der zeitlichen Projektion des Bildes t(j) auf das Bild t(j+1) versetzt wurde, und dadurch, daß für jeden mit "normal" oder "verdeckend" etikettierten Bildpunkt des zu interpolierenden Bildes T(j) die Luminanz dieses Bildpunktes das Ergebnis einer Interpolation zwischen zwei Eildpunkten ist, einem ersten und einem zweiten, wobei der erste, auf dem Bild t(j+1) liegende Bildpunkt derjenige Bildpunkt ist, dessen Projektion von diesem Bildpunkt des Bildes T(j) empfangen und beibehalten wurde, wobei der zweite Bildpunkt derjenige Bildpunkt von t(j) ist, dessen Projektion von dem ersten Bildpunkt empfangen und beibehalten wurde, und dadurch, daß für jeden am Ende der ersten Phase mit "Loch" etikettierten Bildpunkt des Bildes T(j) die Luminanz dieses Bildpunktes des zu interpolierenden Bildes T(j) in der folgenden Weise als Funktion der Etiketten von jedem der vier Bildpunkte erhalten wird, die die zwei Endpunkte des Bewegungsvektors auf den Bildern t(j) und t(j+1) einrahmen:
- falls auf dem Bild t(j) einer der vier den Endpunkt des Bewegungsvektors einrahmenden Bildpunkte mit "verdeckend" etikettiert ist und keiner "versschwindend" ist und falls auf dem Bild t(j+1) einer der vier den Endpunkt des Bewegungsvektors einrahmenden Bildpunkte mit "auftauchend" etikettiert ist, wird die Luminanz des Bildpunktes des Bildes T(j) nur auf der Grundlage des Bildes t(j+1) rekonstruiert;
- falls auf dem Bild t(j+1) einer der vier den Endpunkt des Bewegungsvektors einrahmenden Bildpunkte mit "verdeckend" etikettiert ist und keiner "auftauchend" ist und falls auf dem Bild t(j) einer der vier den Endpunkt des Bewegungsvektors einrahmenden Bildpunkte mit "verschwindend" etikettiert ist, wird die Luminanz des Bildpunktes des Bildes T(j) nur auf der Grundlage des Bildes t(j) rekonstruiert;
- in den anderen Fällen wird die Luminanz des Bildpunktes des Bildes T(j) auf der Grundlage der Bilder t(j+1) und t(j) rekonstruiert.

13. Verfahren nach Anspruch 9, dadurch gekennzeichnet, daß den Bildpunkten der reellen Bilder eine fünfte Klasse zugeordnet wird, wobei die dieser Klasse angehörenden Bildpunkte mit "verschwindend" etikettiert werden, wobei diese Bildpunkte sich nur in dem Bild t(j) finden können, das dem zu Interpolierenden Bild T(j) vorhergeht, wobei die Bildpunkte, die dieses Etikett empfangen, diejenigen sind, deren Projektion in dem reellen Bild t(j+1) im Laufe der zeitlichen Projektion des Bildes t(j) auf das Bild t(j+1) versetzt wurde, und dadurch, daß während der Projektion des Bewegungsfeldes des reellen Bildes t(j+1) auf das zu interpolierende Bild T(J) der Bewegungsvektor der mit "auftauchend" etikettierten Bildpunkte des Bildes t(j+1) nicht projiziert wird, anschließend die Projektion des Bewegungsvektors der Bildpunkte des Bildes t(j), das dem zu interpolierenden Bild vorangeht, auf das Bild T(j) durchgeführt wird, indem dasselbe Verfahren wie für die Projektion des Bildes t(j+1) auf das zu interpolierende Bild T(j) verwendet wird, wobei von dieser Projektion nur die Vektoren beibehalten werden, die von einem Bildpunkt des zu interpolierenden Bildes T(j) empfangen werden, der am Ende der Projektion des Bildes t(j+1) noch mit "Loch" etikettiert ist, wobei der Bildpunkt des zu interpolierenden Bildes T(j), der einen Vektor des Bildes t(j) erhält, dann mit "verschwindend" etikettiert wird, daß anschließend die zeitliche Projektion des Vektorfeldes des reellen Bildes t(j+2) auf das zu interpolierende Bild T(j) durchgeführt wird, indem von dieser Projektion nur die Vektoren des reellen Bildes t(j+2) beibehalten werden, die von Bildpunkten empfangen werden, die am Ende der zwei vorhergehenden zeitlichen Projektionen noch mit "Loch" etikettiert sind, wobei diese Bildpunkte dann das Etikett "auftauchend" empfangen.

14. Verfahren nach Anspruch 13, dadurch gekennzeichnet, daß der Bewegungsvektor eines Bildpunktes des zu interpolierenden Bildes T(j), der am Ende der zeitlichen Projektionen der Bilder t(j+1), t(j) und t(j+2) immer noch mit dem Etikett "Loch" versehen ist, durch räumliche Interpolation berechnet wird und dem Bildpunkt ein Etikett "normal" zugewiesen wird.

15. Verfahren nach einem der Ansprüche 13 oder 14, dadurch gekennzeichnet, daß:
- die mit "normal" etikettierten Bildpunkte des Bildes T(j) auf der Grundlage der zwei es einrahmenden Bilder t(j) und t(j+1) interpoliert werden;
- die mit "verschwindend" etikettierten Bildpunkte des Bildes T(j) auf der Grundlage des Bildes t(j) interpoliert werden; und
- die mit "auftauchend" etikettierten Bildpunkte des Bildes T(j) auf der Grundlage des Bildes t(j+1) interpoliert werden.
